(19) Europäisches Patentamt
European Patent Office
Office européen des brevets

(11) EP 4 647 974 A1

(12) **EUROPEAN PATENT APPLICATION**

(43) Date of publication:
12.11.2025 Bulletin 2025/46

(21) Application number: 25174530.3

(22) Date of filing: 06.05.2025

(51) International Patent Classification (IPC):
*G06N 10/20* (2022.01)        *G06N 10/60* (2022.01)
*G06N 10/40* (2022.01)        *G06N 7/01* (2023.01)

(52) Cooperative Patent Classification (CPC):
**G06N 10/20; G06N 10/60;** G06N 7/01; G06N 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.05.2024 US 202463642935 P

(71) Applicant: Xanadu Quantum Technologies Inc.
Toronto, Ontario M5G 2C8 (CA)

(72) Inventors:
• LOAIZA GANEM, Ignacio
  Toronto, M6H 4K6 (CA)
• MOTLAGH HAGH NEGAHDAR, Danial
  Aurora, ON L4G 7E2 (CA)
• HEJAZI, Kasra
  Los Angeles, 90025 (US)
• FOMICHEV, Stepan
  Toronto, M4S 0B8 (CA)

(74) Representative: Hoyng Rokh Monegier B.V.
Rembrandt Tower, 30th Floor
Amstelplein 1
1096 HA Amsterdam (NL)

(54) **METHOD OF MEASURING A RESPONSE FUNCTION OF A QUANTUM SYSTEM USING A QUANTUM COMPUTER**

(57)     The method can include, for each one of one or more paths along which the quantum system may evolve from an initial state to a final state due to one or more actions of an effect : performing a plurality of iterations, each iteration including: preparing the initial state of the quantum system in a system register of the quantum computer; applying a sequence of operators interspersed with time evolutions in a permutation specific to the corresponding path, wherein the operators are one or more operators corresponding to the one or more actions of the effect and an operator corresponding to the action of an observable of the quantum system, the operators are applied by block encoding, and the time evolutions each correspond to one or more of the one or more time delays.

Fig. 1

**Description**

**BACKGROUND**

Quantum systems, i.e., systems which harness the quantum properties of matter for human use, have received significant research and development interest and activity in recent years and are expected to become more mainstream within the coming decades. A lot of this new interest is tied to the immense potential of the technology, particularly in relation to quantum computing and computerized communication security, but also in relation to other significant areas of interest such as quantum sensing.

Quantum systems essentially seek to control quantum interactions between different particles/fields and harness their quantum properties for human use. Quantum interactions typically involve the evolution of one or more quantum states over time. Examples of particles which can exhibit quantum behavior at the subatomic level include electrons and photons, but other approaches exist such as phonon-based approaches or cold atom/ion-based approaches. Various architectures exist for use as quantum systems and which are operable to control the evolution of quantum states, and the choice of a given architecture depends on the type of particles which are selected to exhibit quantum behavior in a given embodiment. Quantum mechanics allows the quantum subsystems to be in a coherent superposition of more than one state simultaneously, a property which is fundamental to quantum computing, for instance.

In the case of many quantum systems, there is a particular challenge in predicting how one or more physical observables of the quantum system will react when perturbed in a particular way from an initial state. The field which addresses this challenge is known as quantum response theory and finds applications including spectroscopic properties (e.g., absorption, emission, Raman), circular dichroism effects, conductivity of nanowires, magnetic properties, electronic properties, chirality, etc. While methods of determining how physical observables in a quantum system react when perturbed were satisfactory to a certain degree, there always remains room for improvement.

**SUMMARY**

Calculating response functions is exponentially hard when addressed classically via either time evolution or sums over excited states, especially in cases where there is a motivation to take into consideration some environmental dissipative and decoherence effects. In particular, the combinatorial explosion in the size of the Hilbert space can become particularly challenging for these systems, since response properties depend not only on a single ground state, but can also involve excited states. During a series of interactions, the system may simultaneously explore all excited states which are coupled by the interaction, an inherently quantum behaviour. To achieve suitable representativity, the modeled response may need to either access all the intermediary eigenstates of the Hamiltonian or the implementation of the time evolution under said Hamiltonian, tasks which are related through an uncertainty principle. Both obtaining eigenstates or performing time evolutions quickly can become prohibitively "expensive" as the size of the quantum system grows. Despite using multiple approximations and computational tricks, more complicated systems and effects often remain outside existing computational capabilities. There was a need to address this issue. Embodiments presented below propose to tackle this issue using a technology which can be said to involve a direct simulation of the evolution of the quantum system on quantum computing hardware. This can be based on the principle that the time evolution of a given quantum Hamiltonian, also known as the Hamiltonian simulation problem, can be efficiently simulated on quantum hardware. Indeed, using product formula techniques, or linear combination of unitaries-based approaches, the cost of the Hamiltonian simulation on quantum hardware can be improved.

Response theory can be considered as a perturbational theory, having that linear response covers the first-order reaction of the system to some interaction, whereas nonlinear response covers the higher orders. In particular, optical response theory has received significant attention due to its direct connection with spectroscopic experiments.

This specification presents embodiments of a unified framework for obtaining response properties on a quantum computer. The framework can be thought of as a direct implementation of the physical experiment, and the output of our proposed circuits can provide direct sampling from the target response in the frequency domain. Directly sampling from the target distribution also hints at possible quantum advantage, especially if the distribution is peaked, as in the case of e.g., giant dipole resonances. Moreover, dissipative effects can be inherently incorporated, in particular the ubiquitous uniform dissipation which can be incorporated *a priori* for no additional cost. More complicated dissipations can be included through non-unitary dissipative time evolutions for an additional cost. Finally, we also note that the framework disclosed herein can be used for arbitrary responses where $\hat{A} \neq \hat{V}$, extending the range of applicability.

In accordance with one aspect, there is provided a method of measuring a response function using a quantum computer. The response function contains the information about how an observable (represented by an operator, let us say operator $\hat{A}$) of a quantum system (represented by a Hamiltonian, let us say $\hat{H}$) evolves when the quantum system evolves from an initial state to a final state due to a sequence of a number, let us say $D$, of actions of an effect (say operator $\hat{V}$) on the quantum system (i.e., a $D^{th}$ order response). In practice, the measurement will have a certain level of precision and will involve an iterative process having a certain number of repetitions of a sequence of several steps. In one embodiment, referred to hereinbelow as the "frequency-domain implementation", the measurement may yield a histogram with amplitudes varying as a function of frequency, which can be a suitable discrete approximation of a continuous response function, and the degree of precision with which the histogram corresponds to the response function can be controlled by controlling the number of repetitions of the iterative process. In another embodiment, referred to hereinbelow as the "time-domain implementation", the measurement may directly obtain the approximation of the response function via a Fourier transform of a time series built using an iterative process, rather than proceeding via the construction of a histogram. The response function may be used, for instance, to retrieve an expectation value of the observable in the final state of the quantum system. The operators and the Hamiltonian can be expressed in the form of a sum of Hermitian terms or unitaries in a classical computer.

The method can take into consideration up to $2^D$ different paths in Liouville space, each one associated with a different (double-sided) Feynman diagram (these different paths will be referred to herein as "Feynman paths", or simply "paths" for convenience). In the time-domain implementation, the process can inherently calculate the interference from the conjugate paths, and therefore take only up to $2^{D-1}$ paths into consideration. Indeed, for a $D$th order response, there can be up to $2^D$ paths contributing to the expectation value of the observable. In practice, conjugate paths often interfere and partially cancel, limiting the paths which contribute to the expectation value of the observable to $2^{D-1}$ paths. Moreover, in various scenarios, it can be known that the contribution of some of the paths may be negligible, further limiting the number of paths which one may want to take into consideration to achieve a suitable representation. Accordingly, in some cases, a suitable representation of the response function may be achieved by taking into consideration a single path.

The method can include a sequence of steps associated with a given path, and can take more than one path into consideration by repeating the sequence of steps for different paths. The method can include a sequence of steps performed on a quantum computer including preparing the initial state of the Hamiltonian $\hat{H}$ in a register which will be referred to herein as a system register, and applying a correlation function circuit on registers of a quantum computer. A "register", in the context of a quantum computer, refers to a group of qubits dedicated to a given purpose in the context of a computation. As will be seen in further detail below, each path has an associated correlation function. In embodiments of the method, this is reflected by a permutation of operators interspersed with time evolutions in the context of the application of the correlation function circuit. The operators can include D applications of operator $\hat{V}$, representing $D$ actions of the effect, and one application of the operator $\hat{A}$. The time evolutions include up to D + 2 time evolutions "sandwiching" each of these operators. Some of the time evolutions may be unity, and be of no effect, while others may be non-unity. Indeed, when the time delay $t = 0$ (nil), the time evolution can be exp(0) = 1 (unity), for instance. The path can have a particular ordering, or permutation, of the operators and of the time evolutions in which the operators are interspersed with the time evolutions. The ordering may begin and end with a unity or non-unity time evolution, and alternate between operators and non-unity time evolutions therebetween. Typically, either the first or the last time evolution is non-unity, and the other may be unity. The sequence of steps can be repeated, say $n$ times, to account for n different paths, in which case the permutation of operators and time evolutions is different for different ones of the n different paths. The permutation can thus be said to be characteristic of the corresponding path. Each time evolution is a function of one (or more) possible time delays $t$ between the actions of the operators.

Indeed, there are three different places a time evolution can be applied for a given time delay. For instance, if $D = 1$, we have a single time delay $t_1$. The single time delay corresponds to three time evolutions, $exp(-i\hat{H}t_1)$, exp(0), and $exp(i\hat{H}t_1)$, which will appear in the correlation function. One of these is identity (i.e., evolution with $t = 0$), while the other two will depend on the same time delay but with opposite sign. Therefore, a single t determines all necessary evolutions. As such, the time evolution associated with some time delay $t_k$ (where $k = 1, ... , D$ such that we have the delays $t_1, t_2, ... , t_D$) can be applied a total of three times: one with $exp(i\hat{H}t_k)$ and one with $exp(-i\hat{H}t_k)$, the third application being exp(0) = 1 (unity). Each time evolution can correspond to one or more time delays, and conversely, each time delay typically corresponds to two non-unity time evolutions. In the permutation, the locations of the time evolutions depend on the particular path, and there can thus be said to be a one-to-one correspondence between the path and the sequence of typically $D + 1$ non-unity time evolutions as a function of the $D$ different delays $t_k$.

Two different categories of implementation of the method are presented in greater detail below. These two categories can be referred to herein as the frequency-domain implementation and the time-domain implementation. Once the relation between the different delays $t_k$ and the characteristic permutations of where the associated time-evolutions are located relative the associated operators is obtained for the different paths, a difference between the frequency-domain implementation and the time-domain implementation can be that for each delay $t_k$, the frequency-domain implementation multiplexes over representative possible values of each one of the $D$ time delays $t_k$ (and can thus be said to be implemented in parallel), whereas in the time-domain implementation, the method is applied to a particular value of each one of the $D$ time delays, the set of one or more values having been obtained through Monte Carlo sampling. Steps associated to the Monte Carlo sampling can be performed on a classical computer.

More specifically, in the frequency-domain implementation, a number of registers corresponding to D time delays may be used to encode possible values of the $D$ different time delays $t_k$ between the D + 1 operators. These registers can be referred to herein as auxiliary registers. The application of the operators can be multiplexed, i.e., be controlled on all of the auxiliary registers which encode the corresponding time delay, on all the possible values encoded in the registers. In the time-domain implementation, the correlation function circuit can be applied in the context of a Hadamard test, and the application of the operators can be controlled on an ancilla qubit. For instance, if $D = 1$, in the case of the time-domain method, a specific value of $t_1$ is determined via a Monte Carlo method. In the frequency-domain method, various possible values of $t_1$ are implemented in parallel through multiplexing.

The response function can be used to obtain an expectation value of an observable in the quantum system. Indeed, the response function may include all the information needed to recover the change in the expectation value at all times. There can be a particular challenge in providing a method of calculating a response function for a quantum system that is perturbed by an arbitrary number ($D$) of actions of the effect (i.e., calculating a response function for a $D^{th}$ order response), including, in particular, a method which can incorporate dissipative effects and/or a method which can calculate the response function directly in the frequency-domain.

The frequency-dependent response function may not be just about the final state, but also reflect the "history" of how the system got there. It can thus have more information and the additional information may be useful in various scenarios.

An example is a two-photon process which involves the absorption and emission of photons with the same frequency. Since the photons have the same frequency, the final state corresponds to the initial state. Therefore, the final state is the same no matter the frequency, but what happened in between is not. This would also mean the expectation value had some intermediate values (after absorption and before emission) that will depend on this frequency. This information can be included in the response function.

Frequency-Domain Implementation

It was found that one way of measuring a response function can be performed on a quantum computer. More specifically, for ease of reference, the observable can correspond to an observable operator ($\hat{A}$) and the quantum system can correspond to a Hamiltonian ($\hat{H}$). The response function can contain information about the evolution of an observable of a quantum system when the quantum system evolves from the initial state to the final state due to a sequence of $D$ action(s) of an effect corresponding to an effect operator ($\hat{V}$) (i.e., a $D^{th}$ degree response) of an environment on the quantum system. The method can include, for each path to be considered, performing a plurality of iterations, each iteration including:

> 1. applying a preparation circuit to a system register of the quantum computer, thereby preparing the initial state of the Hamiltonian in the system register;

> 2. preparing $D$ auxiliary registers in an initial superposition encoding $D$ different time delays $t_k$ between a sequence of $D$ actions of $\hat{V}$ and one action of $\hat{A}$ in a permutation associated to the current path;

> 3. applying a correlation function circuit including applying a sequence of operators interspersed among time evolutions from the initial state to the final state with the time evolutions multiplexed on the auxiliary registers, which can include applying the sequence of $D$ actions of $\hat{V}$ and one action of $\hat{A}$ in the permutation, interspersed amongst applications of time evolutions, wherein both the operators and the time evolutions are in a permutation corresponding to the path of the current iteration (the corresponding path); the time evolutions corresponding to each one of the time delays $t_k$, being in the form $\exp(i\hat{H}t)$, and being multiplexed on the auxiliary registers (i.e., each application of a time evolution can correspond to a corresponding time delay, and applying the time evolution can be performed in a manner controlled on all the auxiliary registers which encode the respective time delay), and the operators being applied by block encoding;

> 4. applying the Hermitian conjugate of the preparation circuit on the system register;

> 5. measuring the system register after applying the Hermitian conjugate;

> 6. performing a Fourier transform to the $D$ auxiliary registers; and

> 7. measuring the auxiliary registers after performing the Fourier transform and after measuring the system register, thereby acquiring a binary encoding of $D$ frequencies.

The process of preparing the initial state of the Hamiltonian in the system register and preparing the auxiliary registers can be performed in the manner in which similar steps of preparing the initial state of the Hamiltonian and preparing QPE registers are performed in a process of quantum phase estimation (QPE).

The encoding of the possible values of the one or more time delays typically involves encoding a discrete selection of representative ones of possible values of the one or more time delays. For instance, while "all" the possible values can be, in practice, a continuous distribution to infinity, it is likely that the span of time considered will be limited, and that the continuous distribution will be approximated by a discrete distribution.

Block encoding can be performed by the technique of linear combination of unitaries (LCU) for instance. Block encoding can be defined as a way of implementing the non-unitary $\hat{A}$ and $\hat{V}$ operators.

The multiplexing over all the possible values of a time delay can be performed on each individual auxiliary register. The auxiliary registers encode different time delays. The multiplexing makes it so that an associated time evolution $\exp(\pm i\hat{H}t)$ is applied for each different time delay $t_k$. The term "multiplexed" is not always used uniformly, and the term parallel is sometimes used instead. The term "multiplexed" is used herein to refer to coherently applying the correlation function over different time delays, and is used herein in a manner to include various realizations, such as i) for binary encodings of time in a little-endian or big-endian representation, controlled time evolutions can be applied over each of the qubits making up the auxiliary register, where for a qubit carrying the significant digit $d$ in the endian encoding, an associated time evolution $dt \times 2^d$, where $dt$ is a chosen timestep, is applied; and ii) for general encodings of time, the multiplexing can be implemented using the unitary iteration technique. Similarly, the expression "control" is sometimes reserved to single qubit control, or to control with respect to a specific state. In this specification, the expression "controlled" will be used in a generalized manner, such as to refer to multiplexing. More specifically, multiplexing will be referred to as "applying time evolutions controlled on all of the one or more auxiliary registers which encode the corresponding time delay(s)". In this context, all times can be said to be implemented in parallel.

It will be noted that some of the time delays may be zero. For example, some Raman processes are third-order processes where one of the delays is 0. If applying the process to this type of scenario, there may only be a dependence on two time delays. Accordingly, the application of some time evolutions correspond to unity and have no effect.

At the end of step 3, the auxiliary registers can still encode the time delays, and the system register may have, for every one of the time delays, the associated correlation function $C(t)$ being applied.

The Fourier transform can then be performed directly on the registers in the quantum computer, after which the auxiliary registers encode frequencies instead of time delays. This can involve summing all the $C(t)$s together, each one with a phase $\exp(-i\omega t)$, and can be done using a Quantum Fourier Transform circuit. In such scenarios, measuring the auxiliary registers can lead to acquiring a binary encoding of $D$ frequencies. This corresponds to a random sampling event from the response function which depends on $D$ frequencies. More specifically, the frequency can be encoded in a binary number, and the measurement can involve measuring a series of 0's and 1's which are a binary representation of a floating point number.

In some embodiments, there can be additional steps to the process, including additional steps prior to the step of measuring the auxiliary registers. Some steps may be performed in a different order than the order specified above. For instance, applying the Hermitian conjugate of the initial state preparation circuit, and/or the measurement of the system register, may be performed in a different order than the specific example sequence presented above.

The steps 1 through 6 can then be repeated a certain number, say $n$, of times, and a histogram of the $D$ frequencies based on the multiple acquisitions of the binary encoding can be built on this basis, until the histogram converges to the response function within a level of statistical representativity which will be related to the number of repetitions $n$. More specifically, the different binary encodings acquired at each iteration can be averaged, until a given level of statistical representativity is deemed to be achieved. This can involve:

8. repeating steps 1 to 7 and building a histogram based on the repetitions until the histogram reaches a desired level of statistical representativity of the contribution of the corresponding path to the response function;

9. if more than one path are to be considered, repeating steps 1 to 8 for the different paths, wherein for each different path, the permutation is different; and

10. obtaining the measurement of the response function from the one or more histograms.

The system register may be measured before the auxiliary registers and after applying the Hermitian conjugate. Measurement of the system register in all 0 states (i.e., measuring the system register in the same initial state as before any gates were applied to the circuit) can be a prerequisite for frequency measurement to be added to the histogram. Measurement in a different state may be used for histogram normalization, in which case the measured frequency may be discarded.

More specifically, applying the Hermitian conjugate of the preparation circuit on the system register can have the purpose of bringing the system register back to the initial state, i.e., the state in which it was in immediately after applying the preparation circuit. When the system register is measured after applying the Hermitian conjugate, and found to be in the initial state, the iteration can be considered a success. When the system register is measured after applying the Hermitian conjugate and found to be in a state different from the initial state, the iteration can be considered unsuccessful.

Building the histogram can include building the histogram based on the binary encoding of $D$ frequencies acquired at each "successful" iteration, while not integrating the binary encodings of $D$ frequencies acquired from the "unsuccessful" iterations. In some embodiments, the measurements made during the "unsuccessful" iterations may nonetheless be used to contribute to a normalization factor of the histogram, together with the measurements made during the "successful" iterations.

At this stage, the histogram may be representative specifically of the contribution of a single path to the response function, which may be considered a suitable measurement of the response function in some cases.

Indeed, up to step 8, the response function has only taken into consideration a single path, which may be suitable to some embodiments. In embodiments where multiple paths are to be considered, e.g., up to $2^D$ paths, steps 1 through 8 can be repeated for each one of the paths which are to be considered, until all the significant contributions have been accounted for.

For each one of the different repetitions, corresponding to different ones of the up to $2^D$ paths, the $D$ actions of the $\hat{V}$ operator and the one action of the $\hat{A}$ operator will be in different permutations during the application of the correlation function circuit, where the different permutations are associated respectively and characteristically to different ones of the paths. In cases where more than one path has a significant contribution on the evolution of the observable, summing the histograms corresponding to those more than one path will lead to a response function which is much more likely to be representative of the true evolution of the observable.

In one example, the additional contributions can be accounted for by summing the histograms corresponding to all the different paths, and the response function may be obtained from the sum of the histograms. In some alternate examples, the latter approach would not be suitable and additional steps may need to be taken. Indeed, the histogram represents a squared amplitude. While the squared amplitude may provide all the information needed, it may not represent negative contributions which may be significant in some cases. If the response is not real, but complex, it may be relevant to separate the real and imaginary contributions.

When one wants to measure an expectation value of the observable, the expectation value can be extracted from the response function. More specifically the expectation value will be a function of the delays between the applications of $\hat{V}$ ($D$ - 1 times) and with the final time when we measure $\hat{A}$. The response function can be perceived as the Fourier transform of the expectation value, which can lie in the frequency-domain. Since there are $D$ delays for $D^{th}$ order response, this quantity depends on $D$ frequencies. Every time the frequency circuit is run, a set of $D$ frequencies is sampled from this distribution. By running the circuit many times, we can rebuild the distribution to arbitrary accuracy. When a time-dependent expectation value of $\hat{A}$ is the target dynamical quantity, the response function can be convoluted with the Fourier transform of the envelope function associated with the pulse-shape of $\hat{V}$, resulting in the time-dependent expectation value of $\hat{A}$.

The next section describes an alternative way of measuring the response function which will be referred to as a "time-domain implementation". It will be noted that the time-domain implementation can use the Monte Carlo approach for doing the Fourier transform, while leading to a comparable end result: obtaining the frequency-dependent distribution (response function) to arbitrary accuracy.

Henceforth, in accordance with a first aspect, there is provided a method of measuring a response function of a quantum system using a quantum computer, the method comprising: performing a plurality of iterations for each one of one or more paths along which the quantum system may evolve from an initial state to a final state due to one or more actions of an effect, each iteration including: preparing the initial state of the quantum system in a system register of the quantum computer, including applying a preparation circuit; encoding possible values of one or more time delays as initial superpositions in corresponding ones of one or more auxiliary registers of the quantum computer; applying a sequence of operators interspersed with time evolutions in a permutation specific to the corresponding path, wherein the operators are one or more operators corresponding to the one or more actions of the effect and an operator corresponding to the action of an observable of the quantum system, the operators are applied by block encoding, the time evolutions each correspond to one or more of the time delays, and the application of each time evolution is multiplexed on all of the one or more auxiliary registers associated to the corresponding one or more time delays; applying a Hermitian conjugate of the preparation circuit to the system register; and measuring the system register; applying a Fourier transform to the one or more auxiliary registers; and measuring the one or more auxiliary registers; and building one or more histograms based on the measurements acquired from each one of the plurality of iterations, and obtaining the response function from the one or more histograms.

Time-Domain Implementation

Rather than using a process such as presented above, which will be referred to herein as being in the frequency-domain implementation, a process which will be referred to herein as being in the time-domain implementation can alternately be used.

In one example embodiment of the time-domain implementation, the method can include, for each path to be taken into consideration:

1. preparing the initial state of the Hamiltonian in a system register of the quantum computer; and

2. obtaining a value of a time delay $t_k$ for each one of $D$ distributions of possible values of time delay $t_k$ between a sequence of $D$ actions of $\hat{V}$ and one action of $\hat{A}$, including sampling the D distributions using a Monte Carlo process.

Then, a Hadamard test can be performed, including:

3. preparing an ancilla qubit into a superposition by applying a Hadamard gate;

4. applying the correlation function circuit based on the obtained value(s) of time delay $t_k$, including applying a sequence of operators interspersed among time evolutions, which can include applying the sequence of $D$ actions of $\hat{V}$ and one action of $\hat{A}$ in a characteristic permutation associated to the current path interspersed amongst applications of time evolutions; here, the time evolutions correspond to the different values of time delay $t_k$, and the operators can be applied by block encoding;

5. *if D is odd*, applying a Hermitian conjugate of a phase gate on the ancilla qubit;

6. applying a Hadamard gate on the ancilla qubit; and

7. measuring the ancilla qubit, thereby sampling a single random variable associated with the delays $t_k$ from a function with $D$ variables.
Then,

8. steps 1 to 7 can be repeated building a time series of the single random variable; and

9. the frequency-dependent response function can be obtained by performing a $D^{th}$ dimensional Fourier transform of the time series.

A general concept behind the time-domain implementation is to implement a particular set of $D$ time delays (by contrast with a number of possible values of time delays applied in parallel), obtain the single random variable, and repeat for many sets of time delays to build the time series of the single random variable. You then do the Fourier transform classically by taking the sum over times with exp(-$i\omega t$) for each different time.

In accordance with this approach, the process can inherently calculate the interference from the conjugate paths, and therefore only up to $2^{D-1}$ paths may be relevant to take into consideration. $D$ can be equal to 1, which corresponds to a linear response scenario, or greater than one, which corresponds to non-linear response scenarios.

It will also be noted that by contrast with the frequency-domain implementation, in the time-domain implementation, the time evolutions are not multiplexed (applied over all different time delays). Rather, a single time delay is obtained using the Monte Carlo process, and the time evolutions are then implemented for that specific time delay. The Monte Carlo process can repeat for a given number of times, until a desired level of statistical representativity is met.

Step 5 corresponds to doing the Hadamard test for the imaginary value. If $D$ is even, the Hadamard test is done for the real value and the Hermitian conjugate of the phase gate is not applied to the ancilla qubit before the second Hadamard gate.

When the ancilla qubit is measured, it will be either in state 0 or state 1.

The correlation function circuit can be said to be associated with a set of $D$ time delays $t_k$ in the sense that the correlation function circuit can be written in terms of time delays $t_k$ (see below).

The Hadamard test can be repeated many times to obtain a target level of statistical representativity. The Monte Carlo approach samples the Hadamard test once per chosen time. This can effectively give a random (Monte Carlo) sampling of the Fourier integral and speed up convergence.

Henceforth, in accordance with another aspect, there is provided : a method of measuring a response function of a quantum system using a quantum computer, the method comprising: for each one of one or more paths along which the quantum system may evolve from an initial state to a final state due to one or more actions of an effect : performing a plurality of iterations, each iteration including: preparing the initial state of the quantum system in a system register of the quantum computer; sampling, using a Monte Carlo process, one or more distributions of possible values of a number of time delays, the number of time delays corresponding to a number of the one or more actions, and thereby isolating a value of each one of the time delays; performing a Hadamard test on the value of each one of the time delays, including: applying a first Hadamard gate to an ancilla qubit, thereby preparing the ancilla qubit into a superposition; applying a sequence of operators interspersed with time evolutions in a permutation specific to the corresponding path, wherein the operators are one or more operators corresponding to the one or more actions of the effect and an operator corresponding to the action of an observable of the quantum system, the operators are applied by block encoding, the time evolutions each correspond to one or more of the one or more time delays, and the application of each time evolution is controlled on the ancilla register; if D is odd, applying a Hermitian conjugate of a phase gate on the ancilla qubit; applying a second Hadamard gate on the ancilla qubit; and measuring the ancilla qubit, thereby sampling a single random variable associated with the values of the delays from a function with a number of variables corresponding to the number of the one or more paths; building a time series of the single random variables obtained from the plurality of iterations; and performing a ($D^{th}$ dimensional) Fourier transform of the time series; and obtaining the response function from a result of the Fourier transform performed for each one of the one or more paths.

More generally, in accordance with another aspect, there is provided a method of measuring a response function of a quantum system using a quantum computer, the method comprising: for each one of one or more paths along which the quantum system may evolve from an initial state to a final state due to one or more actions of an effect : performing a plurality of iterations, each iteration including: preparing the initial state of the quantum system in a system register of the quantum computer; applying a sequence of operators interspersed with time evolutions in a permutation specific to the corresponding path, wherein the operators are one or more operators corresponding to the one or more actions of the effect and an operator corresponding to the action of an observable of the quantum system, the operators are applied by block encoding, and the time evolutions each correspond to one or more of the one or more time delays.

Many further features and combinations thereof concerning the present improvements will appear to those skilled in the art following a reading of the instant disclosure.

## DESCRIPTION OF THE FIGURES

In the figures,

Fig. 1 is a view of an example quantum computer;

Fig. 2 is a flow chart of a method of measuring a response function;

Fig. 3 is a flow chart of a process of performing interaction in the context of the method of measuring a response function of Fig. 2;

Fig. 4A to 4C are quantum circuits;

Fig. 5 is a graph of amplitude distribution as a function of frequency;

Fig. 6 is a quantum circuit representing a Hadamard test;

Fig. 7 is a quantum circuit;

Fig. 8 is an expanded circuit implementation of a second-order time correlation operator;

Fig. 9 is a Hadamard-based circuit;

Fig. 10 shows another example of a quantum computer; and

Fig. 11 shows an example of a classical computer.

## DETAILED DESCRIPTION

Various technologies of hosting quantum information have been developed over the years, and many more technologies are expected to continue to surface. Some technologies use electrons, for instance, wherein the state of the spin can be used to encode quantum information (e.g., spin up vs. spin down). Other technologies use photons, where the state of the polarization can be used to encode quantum information (e.g., vertical polarization vs. horizontal polarization), or bosonic encoding may be used. The encoding scheme can be binary (e.g., spin up vs. spin down) or continuous variable based. In one example of an architecture using bosonic encoding, a plurality of Gaussian Boson Sampling (GBS) sources each configured to generate a continuous-variable (CV) state such as a Gottesman-Kitaev-Preskill (GKP) state may be used, and data may be mapped onto the generated CV states. Such an embodiment can be implemented in a photonic architecture where the CV states are states of light, for instance.

Various architectures of quantum computers have been developed in recent years, such as architectures based on superconducting circuits, quantum dots, trapped ions, photonic circuits, phonons, cold atoms, and hybrid approaches. Some architectures are perceived as more promising than others, but the overall maturity of the field is such that breakthrough, game-changing innovations are expected to continue to occur. It will be understood that while existing hardware and process steps have led to the relatively intense level of international excitement about the possibilities opened up via quantum computing, there remains much room for improvement, and many further developments will be required before quantum computers can be offered in the form of commercially available products.

In the case of many architectures, the quantum behavior is exhibited in a cryogenic environment, such as below 100 K, 50 K, 10 K or even lower, depending on the architecture, although research for quantum systems operable at higher temperatures is a highly active area of current research. Such temperatures can be sustained with a specialized refrigerator referred to as a cryostat. One feature of some photonic architectures is that the quantum states may be exhibited in a non-cryogenic environment (e.g., photonic modes used as qubits "living" at room temperature). However, even in photonic architectures, it is common to have some elements of the system operate in a cryostat, such as may be the case with some elements of a measurement system (e.g., photon number resolving (PNR) detectors).

The basic concept of performing a computation in a quantum context typically involves a quantum interaction such as entanglement between quantum states of one or more particles referred to as quantum subsystems. A typical approach to quantum computing is to make definitions of qubits based on possible quantum states in the quantum subsystem. This latter process is commonly referred to as encoding. Indeed, in a process of quantum computation, information can be encoded in the form of eigenstates of quantum subsystems. Particular hardware and complex control schemes, typically encoded as software functions and executed by a classical computer, are typically required. The definition of the qubits is typically stored in a memory of the classical computer. Different types of hardware which can host various types of quantum states exist, and the selection thereof depends on the nature of the quantum subsystem used as a resource in the quantum computation.

Different forms of quantum computing exist, which typically involve using two or more quantum subsystems interconnected to one another in a manner to allow quantum interaction, typically quantum entanglement.

In adiabatic quantum computing, a specific problem is posed in the form of a configuration of interconnection between quantum subsystems which can communicate directly with one another, and the solution to the problem appears in the form of a ground state of the overall system.

In gate-based quantum computing, which can provide a "universal" computing approach, quantum gates are applied in a controlled manner. There are two common types of approaches. In the standard circuit-based model of quantum computing, quantum states are initialized in the form of a plurality of quantum subsystems, and a sequence of gates referred to as a circuit is applied by controlling the quantum interaction between some of the quantum subsystems using devices commonly referred to as couplers. The couplers are used to selectively allow or prevent the interaction between corresponding quantum subsystems. A measurement is then applied to the quantum subsystems to conclude the quantum computation.

Measurement-based quantum computation (MBQC) differs from standard circuit-based quantum computation but has been shown to have the potential to be mathematically equivalent. In measurement-based quantum computation, quantum states are initialized and entangled into cluster states. The application of the gates is performed by the way the measurement is applied, and more specifically, as a sequence of adaptive measurements where the way subsequent measurements are performed depends on the results of previous measurements. In MBQC, measurements of the quantum states (e.g., homodyne measurements of entangled photonic states) are what actually perform the quantum logic operations. In one example of photonic MBQC, a number of photonic states (e.g., GKP states, squeezed states) are produced and then entangled into a "cluster state," (e.g., a 3D lattice of optical modes). Measurements are then performed on the cluster state. These measurements are used for error correction and to perform MBQC. Therefore, in MBQC, quantum "gates" are implemented by the measurements, though MBQC maps perhaps less directly to the "circuits" of the standard circuit-based model.

Other forms of quantum computing applications can include quantum communication routers, for instance. The exact nature of the quantum subsystems and of any couplers will vary depending on the type of quantum architectures in which they are implemented.

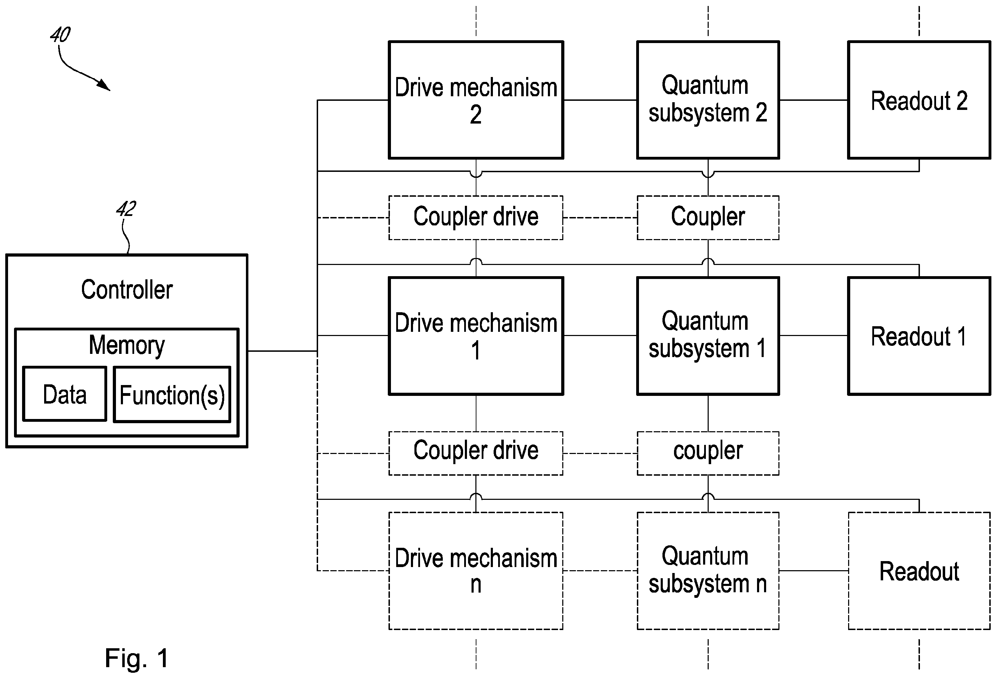

Fig. 1 presents a highly simplistic example of a quantum computer operating on the basis of circuit-based quantum computations. The quantum computer shown in Fig. 1 has a quantum system which includes a plurality of quantum subsystems. In the context of quantum computing, the quantum subsystems are used to host logical states and can be referred to as qubits, and the quantum system can be referred to as a quantum processor 40. Typical quantum computers have many quantum subsystems, such as 10's of qubits, or more. In the context of performing a quantum computation, groups of more than one qubit can be reserved for certain specific functions, and referred to as registers. The nature of the qubits, the means by which logical states are hosted in the qubits, and the means by which operations are performed between the qubits depend on the choice of architecture.

In many applications where qubits are based on bosonic encoding, for example, the logical states may be driven in some form of resonator using some form of driving hardware. The driving hardware is controlled by a component which will be referred to herein as a controller for simplicity, and which typically includes a classical computer (i.e., a computer which uses binary bits rather than qubits to encode information). The qubits are often refrigerated to very low temperatures and insulated from the external environment. In an adiabatic quantum computing architecture, the quantum subsystems can be directly operably interconnected to one another. In circuit-based quantum computing, the quantum subsystems are typically interconnected to one another via couplers which are used to selectively control the interactions between the quantum subsystems. The couplers can also be quantum subsystems operable to host states via which the logical states of the two or more connecting quantum subsystems are to interact, and are also driven by driving hardware which can be controlled by the same controller for convenience. Readout ports can be provided via which the state of the qubits can be read, an operation which can be said to involve "measuring."

The controller 42 can be expected to include a memory which can include computer-readable instructions executable to perform functions driving the operation of the controller 42 and devices it controls, and data. The functions can include a "driving program," for instance, which, in the case of circuit-based quantum computing, can include a sequence of gates, typically referred to as a quantum circuit, stored as data in the memory. When the states of the qubits are read, the measured values can be stored in the form of data, for instance.

Performing a quantum computation can involve a quantum interaction, such as entanglement, between the physical states (which encode information) of the different quantum subsystems. However, for a quantum computation to occur, one may further actively initialize the physical states of the quantum subsystems prior to the quantum interaction (e.g., control the physical states of the quantum subsystems), and actively measure the physical states subsequent to the quantum interaction. Moreover, when performing a quantum computation in a circuit-based model, one may additionally actively control the interaction via a coupler which is changed from a configuration where it impedes interaction to a configuration where it favors interaction, and then back.

Henceforth, performing a given quantum computation can involve the steps of initializing, interacting, and measuring. "Interacting" can involve applying one or more gates or encoding, and can be performed in accordance with a quantum circuit, typically referred to as a "circuit" for short. Accordingly, any of the steps of preparing, initializing, interacting, and measuring may have corresponding hardware elements and an active control process associated therewith.

Any active control step may require associated elements of hardware. Moreover, in practical implementations, it is impossible to manually control the hardware associated with the active control steps in a context of the amount of time available to perform any one of these steps. Accordingly, automated control can be used to implement the active control steps. The automated control processes can take the form of associated functions defined by corresponding software modules. Accordingly, several elements of hardware, such as preparing hardware, initializing hardware, coupler control hardware, and measuring hardware may involve automated, active control in the context of performing a single quantum computation. The control functions for such hardware elements may be performed via corresponding software modules which can be in the form of computer-readable instructions driving the operation of the controller.

The components of the quantum processor, such as the quantum subsystems and some or all of the control hardware, are typically refrigerated to very low temperatures and insulated from the environment, and can therefore be said to be inside a "refrigerator," which can be a dilution refrigerator for instance. Components of the classical computer such as its processor and its non-transitory memory can be located outside the refrigerator. Electrical connections can therefore extend across an enclosure of the refrigerator, between the ambient temperature environment and the cryogenic environment. The combination of the classical computer, of the quantum processor, of the electrical connections, and of the refrigerator can be referred to collectively as a "quantum computer."

While a simplistic scenario having a minimum of 2 quantum subsystems is schematized in solid lines in Fig. 1, in practice, it can be preferred to embody quantum computers with a significantly greater number of quantum subsystems, or qubits, which can significantly affect the complexity of the overall system, both from the hardware and from the control process points of view.

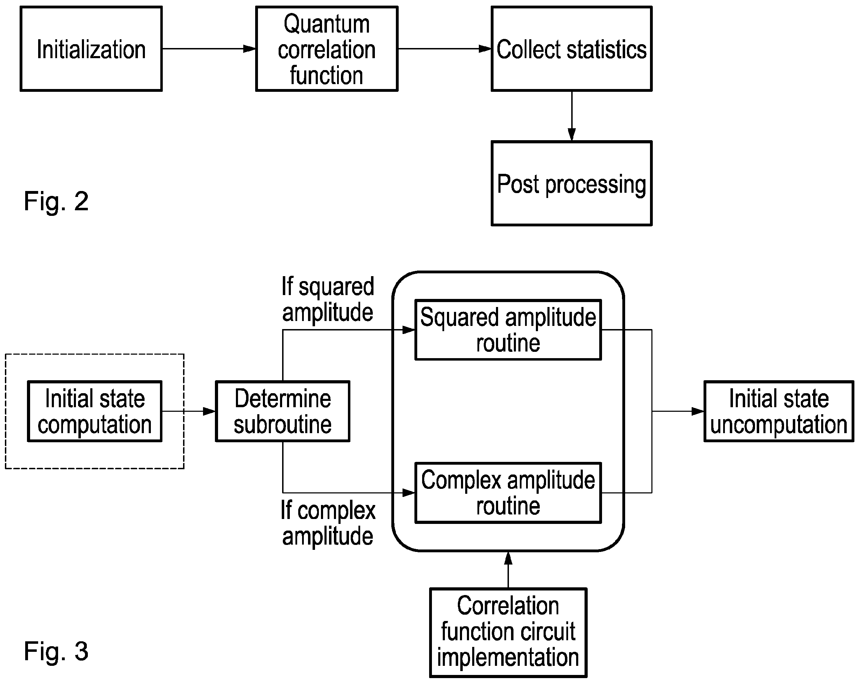

Two detailed examples of methods of measuring a response function of a quantum system using a quantum computer will now be provided, and various options will be discussed. The first example can be said to be in accordance with the frequency-domain implementation, whereas the second example can be said to be in accordance with the time-domain implementation. Both examples can be said to generally follow the flow chart presented in Fig. 2 which includes a step of initialization, a step of interaction which includes applying a sequence of operators interspersed with time evolutions referred to as a whole herein as the correlation function (C), and a step of measurement which may involve statistics collection and post processing.

Initialization, which can be referred to as an initialization module, can be very similar or the same in both examples, and may involve steps such as specifying the quantum system and the dynamical phenomena of interest, constructing the Hamiltonian, choosing the interaction term $\hat{V}$, the response degree $D$ (number of actions of the effect/interaction), the observable $\hat{A}$, whether a dissipative environment is present or not, etc. A process referred to herein as the response space method and detailed further below may be applied at this step. The initial state can be defined (e.g., ground state, excited state, thermal state, etc.) as well as the interaction paths. It can be known that only a subset of the possible interaction paths have a significant effect on the response function, in which case the subset can be defined.

More specifically, the quantum system is described by a Hamiltonian $\hat{H}$. This Hamiltonian can be efficiently described by a classical computer 42 as a sum of local Hermitian terms or unitaries. Observables in quantum mechanics can be in the form of physical quantities that can be measured in a quantum system. These can be represented by linear, Hermitian operators that act on the system's wavefunction. In workflows presented below, an objective can be to compute how a physical property of the system, represented by the expectation value with respect to an observable $\hat{A}$, changes with respect to an interaction with an environment or a field whose effect on our system is described by a Hermitian operator $\hat{V}$. The $D$th degree response of the system corresponds to the expectation value of $\hat{A}$ with possible paths where $\hat{V}$ acts $D$ times on the system. Both $\hat{A}$ and $\hat{V}$ are efficiently described by a classical computer 42 as a sum of local Hermitian terms or unitaries. We also specify whether a dissipative environment is acting on the system. Note that there are cases where the target response lives in a subspace of the entire Hilbert space, in which case the response space method may be applied to simplify computation.

The evolution of a quantum process is dependent on its initial state. This initial state is often an equilibrium state of the Hamiltonian $\hat{H}$, such as its ground state, excited state, or thermal state. The methods can include preparing the Hamiltonian $\hat{H}$ representing the initial state of the quantum system in a first register referred to herein as the system register. The system register encodes the specific wavefunction of the quantum system under treatment. In the example below, this state is either given or estimated using a classical method such as sum of Slaters, by configuration interaction methods, or described using a quantum circuit provided by the user.

For the $D$th degree response of the system, there are $2^D$ different paths which contribute to a change in the expectation value of $\hat{A}$. However, in many physical scenarios of interest, we know a *priori* which paths will have significant effects. In the example presented below, we chose only the paths with contributions we want to include in our calculations.

The initialization can also involve writing down the correlation function operator(s) corresponding to different ones of one or more paths to be considered. For each path, the correlation function can have a particular permutation of $D$ applications of $\hat{V}$ at different times, and one application of $\hat{A}$. E.g., $\hat{A}(t_1 + t_2)\hat{V}(t_1)\hat{V}(0)$ for $D = 2$. The expression can be expanded, leading to the operators being interspersed with time evolutions, and some time evolutions can be canceled for convenience. Continuing on this example, the expanded form can be:

$$C(\vec{t}) = \mathrm{Tr}\{\hat{A}(t_1 + t_2)\hat{V}(t_1)\hat{V}(0)\hat{\rho}_0\} =$$

$$\mathrm{Tr}\left\{\exp\left(-i\hat{H}(t_1 + t_2)\right)\hat{A}\exp\left(i\hat{H}(t_1 + t_2)\right)\exp\left(-i\hat{H}t_1\right)\hat{V}\exp\left(i\hat{H}t_1\right)\exp(0)\hat{V}\exp(0)\hat{\rho}_0\right\} =$$

$$\mathrm{Tr}\left\{\exp\left(-i\hat{H}(t_1 + t_2)\right)\hat{A}\exp\left(i\hat{H}t_2\right)\hat{V}\exp\left(i\hat{H}t_1\right)\hat{V}\hat{\rho}_0\right\},$$

where $\vec{t} = \{0, t_1, t_2\}$ and $\hat{\rho}_0$ is an equilibrium state (e.g., ground state, excited state, thermal state). Note that for $D$th order response, we will generally have $D$ different time delays. After this cancellation, each time delay $t$ may appear a total of one time with a positive sign, and one time with a negative sign over the entire expression.

The associated $D + 2$ time evolutions may then be determined with the $D + 1$ operator applications for a given correlation function. In the previous example, the specific permutation of time evolutions and operators associated to a given path can be encoded with a variable, say $k$, as follows:

$$\exp\left(i\hat{H}(t_1 + t_2)\right); \exp\left(i\hat{H}t_2\right); \exp\left(i\hat{H}t_1\right); \exp(0) \leftrightarrow k = 1; 2; 3; 4$$

$$\hat{A}; \hat{V}; \hat{V} \leftrightarrow k = 1; 2; 3$$

An iterative process can then be performed. In this example, it can include the following steps:

$$\text{A) set } k = 1.$$

B) Apply the time evolution associated with $k = 1$ to the system register. In the frequency domain implementation, multiple possible values of the time delays are encoded in auxiliary registers, and the application of the time evolutions are multiplexed on the auxiliary registers which encode possible values of time delays corresponding to the time evolution (e.g., $\exp(-i\hat{H}(t_1 + t_2)) \leftrightarrow$ auxiliary registers 1 and 2). In the time-domain implementation, a single value of each time delay was previously selected via Monte Carlo sampling, and the application of the time evolution is controlled on an ancilla qubit. In some cases, the time evolution may be unity.

C) Apply block-encoding of the $\hat{A}$ or $\hat{V}$ which is associated to the current $k$ to the system register. Application of a block-encoding for a given operator (e.g., $\hat{V}$) can be done through Linear Combination of Unitaries (LCU)-based techniques. This can involve encoding the action of a non-unitary operator into a larger space through addition of some ancilla qubits, rendering the larger operator unitary and thus implementable on a quantum computer. This approach can include first decomposing $\hat{V}$ into an LCU. This can be done either directly, e.g., through Jordan-Wigner transformation of $\hat{V}$, or if $\hat{V}$ is a one-body operator then it can be optimally encoded as an LCU through the use of basis rotations and Pauli-Z operations. Once an LCU for $\hat{V}$ has been given, associated PREPARE and SELECT oracles can be constructed and used to block-encode $\hat{V}$. The successful application of $\hat{V}$ can then be performed by a post-selection on the ancilla qubits to be all 0. Amplitude amplification can be used to increase the success probability, which may increase circuit complexity while reducing total runtime.

D) If dissipation is being included in dynamics, then the non-unitary dissipation can also be applied here as a block-encoding.

E) Set $k = k + 1$. If $k = D + 2$, apply time evolution associated with current $k$ similarly as how time evolution was applied above, and the routine is finished. Otherwise, return to B).

Above, a circuit implementation of a single path was described. This circuit implementation can then be used as a subroutine in a larger circuit to encode the quantity of interest in the quantum computer.

There can be some differences between the time-domain implementation and the frequency-domain implementation. We will begin by describing the example of the frequency-domain implementation.

Example Frequency-Domain Implementation

In the frequency domain implementation, one or more sets of possible values for corresponding ones of the one or more time delays are encoded as initial superpositions in corresponding ones of one or more registers which will be referred to herein as the auxiliary registers to differentiate them from the system register.

Preparing the initial superpositions of the auxiliary register can be done through a Hadamard transform, which prepares possible values of each time delay $t$ in a uniform superposition. However, alternative initial states with a particular distribution (e.g., $\exp(-\eta t)$ for some broadening constant $\eta$) can be prepared, which corresponds to convoluting the final result with a filter function (e.g., Lorentzian). This step effectively prepares a coherent superposition over delays $t_k$ with some given weights.

Time evolutions can be applied on the system register, controlled on the relevant auxiliary registers. This corresponds to performing the time-evolution $\exp(\pm i\hat{H}t)$ on the system register for each particular time delay $t_k$ encoded in the auxiliary registers. The controlled time evolution can be performed with either product-formula or qubitization-based Hamiltonian simulation techniques. This step can be referred to as an application of $\exp(\pm i\hat{H}t)$ multiplexed on the one or more auxiliary registers.

The uncomputation can include applying the Hermitian conjugate of the initial state preparation routine. A Fourier transform can then be applied on the auxiliary registers. These registers then encode frequencies instead of times. The procedure can end with a measurement of the auxiliary registers, which can then encode a binary representation of a frequency associated to an eigenvalue of $\hat{H}$.

It will be noted that the response function for a particular path is in general a complex quantity. However, there are cases where we are only interested in the amplitude of this quantity. If this is the case, a simplified, squared amplitude routine can be used. Otherwise, a complex amplitude routine can be used. Examples of both will be described below.

If the target dynamical quantity specified in the context of initialization above is the response function, then the calculated response function can be returned as the final answer of the workflow.

If the time-dependent expectation value of $\hat{A}$ is the target dynamical quantity, then the obtained response function can be convoluted with the Fourier transform of the envelope function associated with the pulse-shape of $\hat{V}$. The resulting time-dependent function can correspond to the time-dependent expectation value of $\hat{A}$, which is the target quantity.

Squared Amplitude Routine

In this example, the routine uses a total of three groups of quantum registers, corresponding to:

- A total of D auxiliary registers.

- A system register encoding the quantum system of interest.

- Block-encoding registers, used for block encoding of $\hat{A}$, $D$ applications of $\hat{V}$, and, optionally, dissipative evolution.

The routine can include preparing the auxiliary registers in an initial superposition encoding possible values of different time delays. This can be done by Hadamard transform or by weighted superposition, to name two examples, the latter encoding uniform broadening from an environment.

The correlation function circuit can be applied with time evolutions multiplexed on associated auxiliary registers, as described above. Block-encoding registers can be used for applications of $\hat{V}$ and $\hat{A}$.

Then perform a Fourier transform on each of the D auxiliary registers. Success over block-encoding registers marks a successful encoding of the frequency-dependent response on the auxiliary registers.

Complex Amplitude Routine

This routine uses a total of four groups of quantum registers, corresponding to:

- A "complex" register comprising a single qubit, which is used to separate the real and imaginary components of the target response function.

- The three registers from the squared amplitude routine above.

The routine can include preparing the complex qubit in superposition using a Hadamard gate.

Controlled on the complex qubit being 0, apply the squared amplitude routine.

Controlled on the complex qubit being 1, apply the complex conjugate of the squared amplitude routine.

Apply a Hadamard gate on the complex qubit and measure. Measurement of 0 (1) implies that the real (imaginary) amplitude of the response has been encoded.

Above, a circuit implementation of a single path was described. This circuit implementation can then be used as a subroutine in a larger circuit to encode the quantity of interest in the quantum computer.

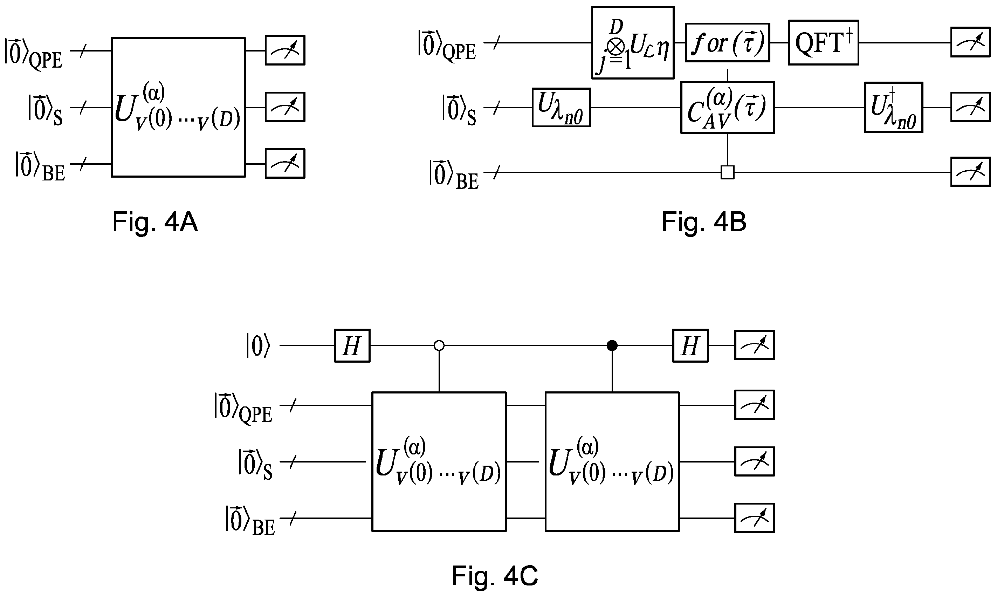

A simple example of this is given in Figs. 4A to 4C. Figs. 4A and 4B show the implementation of the squared amplitude routine, with the explicit form of the circuit shown at 4B. In Fig. 4B, $|\vec{0}\rangle_{QPE}$ represents the auxiliary registers, $|\vec{0}\rangle_S$ represents the system register, and $|\vec{0}\rangle_{BE}$ represents the block encoding registers. Fig. 4C shows the implementation of the complex amplitude routine, where $|0\rangle$ represents the "complex" register comprising a single qubit (which is referred to above as "the complex qubit"). Note that the circuit in Fig. 4C uses the gate $U^{(\alpha)}_{V^{(0)}...V^{(D)}}$ as a subroutine. The "controlled on the complex qubit being 0" and "controlled on the complex qubit being 1" discussed above are visible on the complex qubit by the white circle and the black circle, respectively.

Finally, we note that with the circuits given here, we could in principle prepare a superposition over all paths at the same time, obtaining the total response with a single circuit. More specifically, this could be done by doing an LCU which adds all the different paths, for example.

As described above, in some embodiments, the technique of amplitude amplification can be used to increase the success probability of the overall procedure by increasing the circuit depth. This can decrease the total runtime in exchange for having more complicated circuits. Using this technique can amplify the probability of success, where "success" corresponds to:

- block-encoding registers marking successful application of the operator; and

- the system register being in all-zeros state (if normalized response is being calculated).

After the optional application of amplitude amplification on these registers, all of them are measured. Results may only be recorded for statistics if measurements corresponding to success on the first two registers are obtained.

Amplitude estimation is another technique which can reduce the overall runtime while increasing the required circuit complexity. This technique may or may not be used in a given embodiment, independently of whether amplitude amplification is used or not. In some embodiments, both techniques can be combined.

When amplitude estimation is used, the amplitude of the auxiliary registers encoding frequencies can be estimated, yielding frequency-dependent amplitudes. If the technique is not used, the measurement of the auxiliary registers may correspond to single frequency measurements, and the procedure described above can be used to obtain the frequency distribution. Both techniques can be referred to as "measuring" in the context of this specification.

More specifically, the amplitude estimation routine can be applied over the auxiliary registers, obtaining frequency-dependent amplitudes. This procedure can be done to some target accuracy $\varepsilon$ for the target response, which can be a frequency-dependent distribution.

The auxiliary registers can be measured, which can yield a set *of D* frequencies (one per register). The procedure can be repeated while collecting frequencies to construct a frequency distribution up to the target accuracy $\varepsilon$.

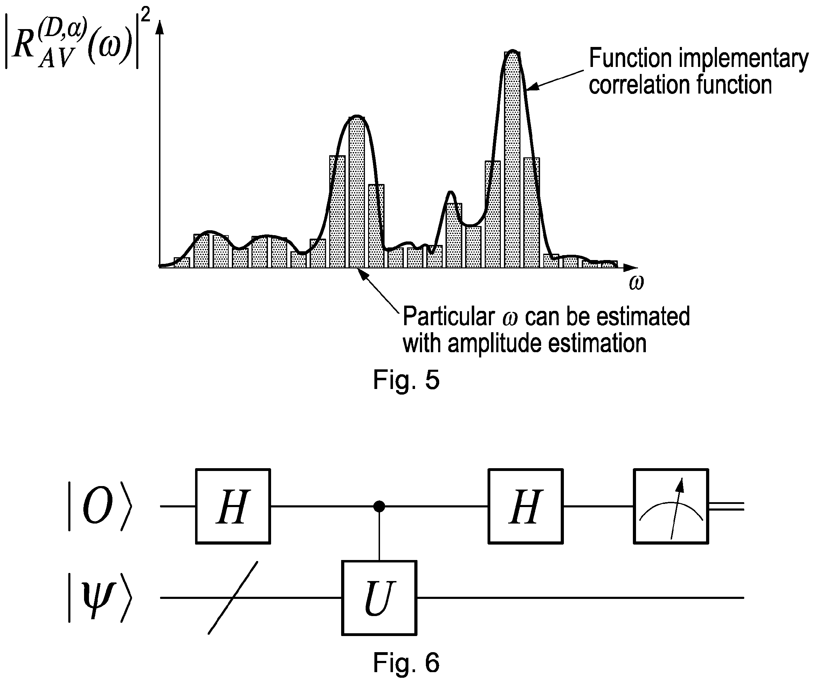

More specifically, with reference to Fig. 5, an explanation will be provided pertaining to the linear response (1-dimensional) case here, noting that this explanation can extend to multiple dimensions.

The target response function $R_{AV}^{(D,\alpha)}(\omega)$ can be considered as a distribution over $\omega$'s. In a nutshell, the frequency-dependent correlation function modules sample $\omega$'s from this distribution. Approximating $R_{AV}^{(D,\alpha)}(\omega)$ to accuracy $\varepsilon$ for all $\omega$'s simultaneously can be done by sampling $R_{AV}^{(D,\alpha)}(\omega)$ directly. This requires $\mathcal{O}(1/\varepsilon^2)$ repetitions (note that $0 < \varepsilon < 1$). Amplitude estimation allows us to determine $R_{AV}^{(D,\alpha)}(\omega)$ for a particular $\omega$ with $\mathcal{O}(1/\varepsilon)$ complexity. Thus, if we are targeting a particular frequency, or a small frequency range, it can be more efficient to run the amplitude estimation circuit over each of the target frequencies, with a complexity of $\mathcal{O}(N/\varepsilon)$ where $N$ is the number of frequencies to be determined. If $R_{AV}^{(D,\alpha)}(\omega)$ is to be obtained over the entire range however, it will be more beneficial to instead directly sample from $R_{AV}^{(D,\alpha)}(\omega)$ to obtain the entire distribution with $\mathcal{O}(1/\varepsilon^2)$ complexity. Note that it could be beneficial to first determine the large amplitudes by sampling over the entire range, and then run the amplitude estimation routine only over amplitudes that are large.

The process presented above can be repeated for different paths, in which case the time evolutions and operators are in different permutations when applying the correlation function, in instances of the process corresponding to different paths. For a given path, the process can be repeated until either the target accuracy has been reached or a pre-defined time budget has been reached.

Time-Domain Implementation

Alternatively to running the circuit in the frequency domain, the circuit can be implemented in the time domain. In some cases, this approach can be more hardware friendly, since the circuit may be simpler to implement, relaxing the hardware requirements, in exchange for increasing the total runtime.

This approach involves running a Hadamard test of the correlation function circuit implementation for a single value of each time delay. By sampling the times following a Monte Carlo approach and measuring the result of this circuit, the frequency-dependent response function can be obtained.

Fig. 6 presents an example quantum circuit corresponding to a textbook application of a Hadamard test. In an embodiment of a time-domain implementation, the one or more single values of the corresponding one or more time delays can be encoded as part of a correlation function being the subject of the unitary U in the circuit, on which the Hadamard test is performed. A phase gate may be added if the imaginary part is the part of interest.

The steps for this approach can include:

A) Choosing an initial value of each time delay $j\tau$ by sampling $j$ from the probability distribution, which corresponds to the Fourier transform of the dissipation. For the nonlinear version, a vector $\vec{J}$ has $D$ entries. The system register is then prepared in the initial state, along with an ancilla qubit in a superposition state by using a Hadamard gate.

B) Applying the correlation function circuit implementation for the chosen time with a control over the ancilla qubit. Time evolutions can be applied while removing the dissipation component associated with the target lineshape; this effect is included through the Monte Carlo sampling of different time delays. Note that for an abelian dissipation case, where all time evolutions cancel with each other, only the block-encodings of $\hat{A}$ and $\hat{V}$ need to be controlled.

C) Depending on whether $D$ is even (odd), we may only seek the real (imaginary) component of the correlation function. As such, for odd D, we apply the Hermitian conjugate of a phase gate in the ancilla qubit as is usually done for switching between real and imaginary components in a Hadamard test.

D) A Hadamard gate is then applied on the ancilla qubit, after which the qubit is measured. The result is recorded in a random variable $Y_J$. Collecting statistics of this variable can then be used to recover the target response function.

For a given path, the process can be repeated until either a target accuracy has been reached or a pre-defined time budget has been reached.

Response Space Method

As described above, there are cases where the target response function lies only in a subspace of the entire Hilbert space where the Hamiltonian is being represented. As an example, we can consider x-ray absorption spectroscopy (XAS), where we often only care about electronic excitations coming from the core orbitals. This is in contrast to excitations from valence orbitals.

In order to avoid calculating the response from the entire space in such cases, we can choose an associated "response space" and freeze the part of the Hilbert space which will not be affecting the target response. In the XAS example, this would correspond to freezing all valence electrons in an occupied configuration. Standard active space techniques can then be used to obtain an effective Hamiltonian in the resulting subspace, along with the operators $\hat{A}$ and $\hat{V}$.

Thus, if the target response function is only required for a known subspace of the possible excitations coming from $\hat{V}$, an associated active space can be formulated. By representing all the system quantities (i.e., operators and wavefunctions) in this subspace, the dimensionality of the Hilbert space can be reduced. This entails a modification of $\hat{H}$, $\hat{A}$, $\hat{V}$, and the initial wavefunction (i.e., the initial state of the quantum system) which are subsequently used during the rest of the workflow.

For example, in the case of XAS, naïve applications of the methods described herein would compute valence-excited states that are irrelevant to the x-ray absorption spectrum, leading to unnecessary cost overheads. In this case, the response space method may be implemented by employing the so-called "core-valence separation approximation" (CVS). This approximation is based on the observation that the matrix elements of the Hamiltonian $\hat{H}$ that connect core-excited determinants and valence-excited determinants are small. Setting these matrix elements to zero decouples the core-excited and valence-excited state manifolds. Consider a dipole operator $\hat{\mu} = \sum_{ab} \hat{\mu}_{ab} c_a^\dagger c_b$ that excites core electrons into partially occupied electron shells and a ground state $|\lambda_0\rangle$ (i.e., the initial state). Here, $\hat{V} = \hat{A} = \hat{\mu}$. By setting the aforementioned matrix elements connecting core-excited determinants and valence-excited determinants to zero, as well as keeping only the terms in the dipole operator $\hat{\mu}$ that are exciting the core electron, the state $\hat{\mu}|\lambda_0\rangle$ is placed into the core-excited subspace, and remains there throughout the quantum computation due to the lack of off-diagonal matrix elements. One can therefore implement the response space method for XAS applications by using CVS, reducing the computation cost with only a marginal reduction in accuracy.

The response space method therefore reduces the number of qubits required to represent the system, as well as the complexity of implementing all operations. In the "worst-case scenario" the response space will correspond to the entire Hilbert space.

Observations

The correlation function operators and their associated circuits are an operator-based representation of a path contributing to the $D^{\text{th}}$ order response of an observable $\hat{A}$ under interactions with a perturbation $\hat{V}$. These operators can be used to target specific physical processes of a given order. They can be used to calculate arbitrary contributions to response functions for a matter system that is being perturbed by a known interaction, for any given response order. The correlation function formalism also efficiently includes dissipative effects if required.

Environmental effects can inherently be incorporated into this framework. For a large class of dissipative environments, their effects can be included for a more efficient computation of the response properties, as opposed to requiring an overhead from the non-unitarity of such effects. In the case where no dissipative environment is present, an environment can be included in an *ad hoc* way by using an associated energy broadening that is beneath the overall target accuracy. This can be used to speed up convergence and lower the overall computational cost.

Environmental effects which broaden all energies uniformly can be included by the initial preparation of the auxiliary registers in a weighted superposition reflecting the dissipation shape. This can be used to speed up convergence to the frequency distribution.

The approaches presented above can be used to calculate a response of arbitrary order for any observable $\hat{A}$ directly in the frequency domain while efficiently incorporating dissipative effects. The inclusion of the *ad hoc* environment in our method can be used to lower the cost of these calculations.

The approaches presented above can be used to reproduce spectroscopic 2D experiments, or to calculate arbitrary-order correlation functions, which can be directly related to response functions. It will also be noted that the frequency domain approach can be interesting in spectroscopic applications, in which the quantity of interest can be the frequency-dependent optical response for a given order.

The approaches presented above can calculate the time-dependent response function for any given path, and can: (1) work for arbitrary $\hat{A}$ and $\hat{V}$, (2) work for arbitrary orders of the response, (3) directly obtain the response in the frequency domain, and (4) efficiently incorporate uniform broadening dissipative effects.

The approaches described above can incorporate uniform broadening dissipative effects in a unitary way, in a manner which does not require non-unitary dynamics. Non-unitary dynamics have an extra cost, requiring post-selection and thus additional runs.

Physical Implementation

The approaches presented above can operate on classical computers and on quantum systems, where some initialization and post-processing steps can be carried out on the former, and the correlation function quantum modules can be carried out on the latter.

In an embodiment, within the simulation initialization module, a classical computer provides the details of the Hamiltonian, interaction term, and observable. The user specifies which paths are relevant for the property of interest, having that for a $D^{th}$ order response function, up to $2^D$ different paths can be included.

The quantum computer can be used for loading or preparing the initial state, obtained through classical means or described using a quantum circuit.

The quantum computer can be composed of superconducting qubits, photonic qubits, trapped-ion qubits, silicon-based qubits, or neutral atoms, to name some examples. These devices apply gates that depend on the circuit used to prepare the initial state.

This process can produce the desired statistics required to obtain the dynamical quantities of interest for the quantum system.

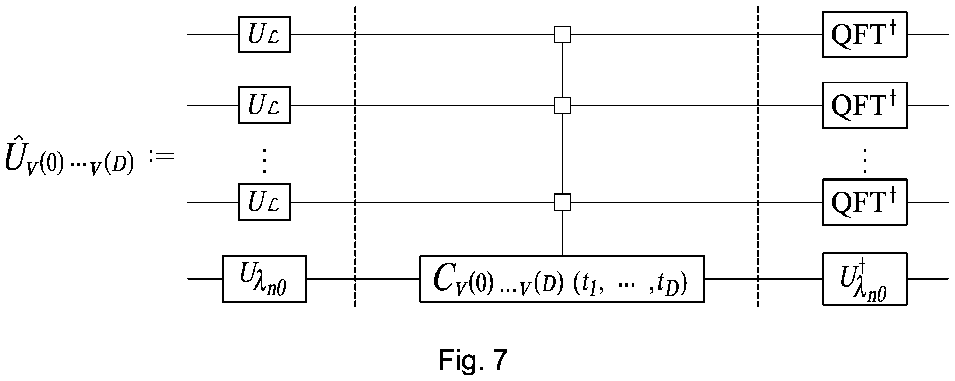

Example methods having been presented above, the theoretical framework underlying methods of measuring a response function presented above will now be detailed in relation with Figs. 7 to 9.

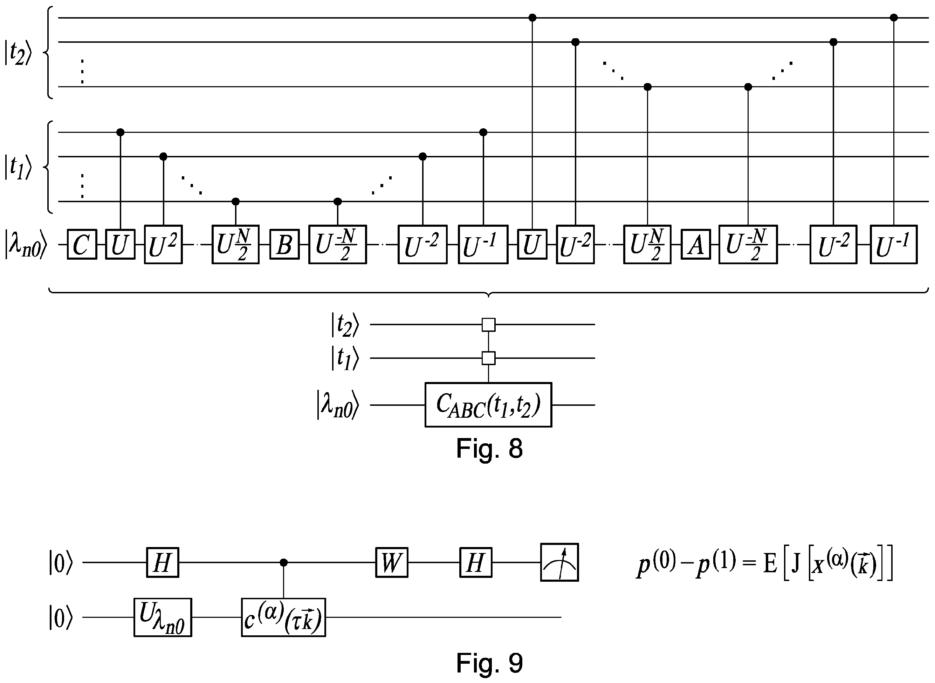

As will be explained in greater detail below, Fig. 7 provides a quantum circuit for $\hat{U}_{V^{(0)}\cdots V^{(D)}}$ such that $\tilde{R}_{V^{(0)}\cdots V^{(D)}}$ $(\omega_1,..., \omega_D) = \langle \omega_1,..., \omega_D, 0| \hat{U}_{V^{(0)}\cdots V^{(D)}}|0,\cdots,0,0\rangle$. The system register $|\lambda_{n_0}\rangle = U_{\lambda_{n_0}}|0\rangle$ and each of the time registers $\sum_{k=0}^{N-1} \alpha_k|k\rangle = U_{\mathcal{L}}|0\rangle$ can be prepared for a window function $\mathcal{L}(\omega) = \frac{1}{\sqrt{N}}\sum_{k=0}^{N-1} \alpha_k e^{ik\omega}$. Next, the $D^{th}$ order time correlation function between $D + 1$ operators $V^{(0)}, V^{(1)},\cdots V^{(D)}$ can be applied as detailed in Fig. 8, followed by a Fourier transform of the time registers and unpreparing of the system register.

Fig. 8 provides an expanded circuit implementation of a second-order time correlation operator $\hat{C}_{ABC}(t_1, t_2) = \hat{A}_I(t_2)\hat{B}_I(t_1)\hat{C} = e^{i\hat{H}t_2}\hat{A}e^{-i\hat{H}t_2}e^{i\hat{H}t_1}\hat{B}e^{-i\hat{H}t_1}\hat{C}$, where we have written $\hat{U} = e^{i\hat{H}}$. Since $\hat{A}, \hat{B},$ or $\hat{C}$ are generally not unitary, their action corresponds to applying a block-encoding of these operators. Note that the correlation function can be recovered by considering the expectation value of $\hat{C}_{ABC}(t_1, t_2)$.

Fig. 9 is a Hadamard-based circuit for the time-domain implementation. The gate $W$ corresponds to $I/S^\dagger$ for a response of degree $D$, where $D$ is even/odd. The circuit implementing $c^{(\alpha)}(\tau\vec{k})$ is the same as that appearing in Fig. 8, where instead of having a multiplexing over different times we have a controlled application over a particular set of times $\tau\vec{k}$. This circuit then returns a value of 1/-1 for the random variable $\mathbf{J}[x^{(\alpha)}(\vec{k})]$ when the ancilla qubit is measured in 0/1.

Correlation Functions

For a Hamiltonian $\hat{H} = \Sigma_j \lambda_j|\lambda_j\rangle\langle\lambda_j|$ and initial state $|\lambda_{n_0}\rangle$, the first order correlation function between two operators $\hat{A}$ and $\hat{B}$ in the time domain is defined as

$$C_{AB}(t) = \langle \hat{A}_I(t)\hat{B}\rangle$$

$$= \langle \lambda_{n_0}|e^{i\hat{H}t}\hat{A}e^{-i\hat{H}t}\hat{B}|\lambda_{n_0}\rangle$$

$$= \sum_{n_1} A_{n_0 n_1} B_{n_1 n_0} e^{i\Delta_{10}t}. \qquad (1)$$

**Interaction** picture operators can be defined as $\hat{A}_I(t) \equiv e^{i\hat{H}t}\hat{A}e^{-i\hat{H}t}$, the matrix elements can be defined as $A_{n_0 n_1} \equiv \langle \lambda_{n_0}|\hat{A}|\lambda_{n_1}\rangle$, and energy differences can be defined as $\Delta_{10} \equiv \lambda_{n_0} - \lambda_{n_1}$. In the frequency domain, the correlation function becomes

$$C_{AB}(\omega) = \int_{-\infty}^{\infty} dt\, e^{-i\omega t} C_{AB}(t)$$

$$= \sum_{n_1} A_{n_0 n_1} B_{n_1 n_0}\, \delta(\Delta_{10} - \omega). \qquad (2)$$

**More** generally the $D^{\text{th}}$ order correlation function between D + 1 operators $\hat{V}^{(0)}, \hat{V}^{(1)}, \cdots \hat{V}^{(D)}$ in the frequency domain can thus be defined as

$$C_{V^{(0)}...V^{(D)}}(\omega_1, \ldots, \omega_D) = \sum_{n_1,...,n_D} V^{(D)}_{n_D n_0} \prod_{j=1}^{D} V^{(j-1)}_{n_{j-1} n_j}\, \delta(\Delta_{(j-1)j} - \omega_{D-j+1}). \quad (3)$$

For the response functions explored below, correlation functions with different time orderings often appear - e.g., $\langle \lambda_{n_0} | e^{i\hat{H}(t_1+t_2)} \hat{A} e^{-i\hat{H}t_2} \hat{V} e^{-i\hat{H}t_1} \hat{V} | \lambda_{n_0} \rangle$ compared to $\langle \lambda_{n_0} | e^{i\hat{H}t_1} \hat{V} e^{i\hat{H}t_2} \hat{A} e^{-i\hat{H}(t_1+t_2)} \hat{V} | \lambda_{n_0} \rangle$. The only modification in Eq. (3) would then correspond to modifying the $j$ indices in the $\Delta_{(j-1)j}$ component such that each $\Delta_{(j-1)j} \to \Delta_{i_{j-1}i_j}$, where $i_j \in \{0,1,...,D\}$ can be obtained after writing the particular time ordering. The considerations in this section can be extended to such cases. For clarity we only consider the standard correlation function in Eq. (3) for the present discussion.

Given a finite energy resolution $\eta \in (0,1)$, we can relax the problem by replacing $\delta(\omega)$ with a window function $\mathcal{L}_\eta$ $(\omega)$, which can be represented as a Fourier series $\mathcal{L}_\eta(\omega) = \frac{1}{\sqrt{N}} \sum_{k=0}^{N-1} \alpha_k e^{ik\omega}$ such that $\|\vec{\alpha}\|^2 = 1$. We then obtain a correlation function with energy broadening

$$\tilde{R}_{V^{(0)}...V^{(D)}}(\omega_1, \ldots, \omega_D) : \left\{ \frac{0\cdot 2\pi}{N}, \frac{1\cdot 2\pi}{N}, \ldots, \frac{(N-1)\cdot 2\pi}{N} \right\}^D \to \mathbb{C}$$

$$= \sum_{n_1,...,n_D} V^{(D)}_{n_D n_0} \prod_{j=1}^{D} V^{(j-1)}_{n_{j-1} n_j}\, \mathcal{L}_\eta(\Delta_{(j-1)j} - \omega_{D-j+1}) \qquad (4)$$

$$= C_{V^{(0)}...V^{(D)}}(\omega_1, \cdots, \omega_D) *^D \left( \prod_{j=1}^{D} \mathcal{L}_\eta(\omega_j) \right), \qquad (5)$$

where we have defined the D-dimensional convolution $*^D$, which corresponds to applying a convolution over each of the $D$ different frequencies $\omega_1, \cdots, \omega_D$. We set

$$\mathcal{L}_\eta(\omega) \sim \begin{cases} 1 - \mathcal{O}(1/D), & \omega \in [-\eta, \eta] \\ \mathcal{O}(1/D), & |\omega| \notin \mathcal{O}(\eta), \end{cases} \qquad (6)$$

to ensure that if $\vec{\omega} \in [-\eta,\eta]^D$ then $\prod_{j=1}^{d} \mathcal{L}_\eta(\omega_j) \in \mathcal{O}(1)$. We thus have a constant probability of success for measuring the right multivariate frequency. This can be efficiently done using Kaiser windows leading to $N \in \mathcal{O}(\log(D)/\varepsilon)$. Also, note that we could use a different resolution $\eta_j$ for each dimension $j = 1,..., D$. For the sake of simplicity we consider a uniform resolution, noting that it can be extended.

Algorithm

The unitary $\hat{U}_{V^{(0)}...V^{(D)}}$ acts on the combined Hilbert space of all $D$ frequency registers and the system register such that

$$\tilde{R}_{V^{(0)}...V^{(D)}}\left( \frac{\omega_1 \cdot 2\pi}{N}, \ldots, \frac{\omega_D \cdot 2\pi}{N} \right) = \langle \omega_1, \ldots, \omega_D, 0 | \hat{U}_{V^{(0)}...V^{(D)}} | 0, \cdots, 0, 0 \rangle. \qquad (7)$$

Together with $\widehat{U}^{*}_{V^{(0)}\dots V^{(D)}}$ ,

$$\tilde{R}_{V^{(0)}\dots V^{(D)}}\left(\frac{\omega_1\cdot 2\pi}{N},\dots,\frac{\omega_D\cdot 2\pi}{N}\right)^{*} = \langle\omega_1,\dots,\omega_D,0|\widehat{U}^{*}_{V^{(0)}\dots V^{(D)}}|0,\cdots,0,0\rangle, \quad (8)$$

and an LCU circuit that separates the real and imaginary parts of the function

$$|0\rangle\langle 0|\,\frac{\widehat{U}_{V^{(0)}\dots V^{(D)}}+\widehat{U}^{*}_{V^{(0)}\dots V^{(D)}}}{2} + |1\rangle\langle 1|\,\frac{\widehat{U}_{V^{(0)}\dots V^{(D)}}-\widehat{U}^{*}_{V^{(0)}\dots V^{(D)}}}{2}, \quad (9)$$

we can estimate $\tilde{R}_{V^{(0)}\dots V^{(D)}}(\vec{\omega})$. This can be done in one of two ways: we can either estimate $\tilde{R}_{V^{(0)}\dots V^{(D)}}(\vec{\omega})$ for a particular $\vec{\omega}\in\left\{\frac{0\cdot 2\pi}{N},\frac{1\cdot 2\pi}{N},\dots,\frac{(N-1)\cdot 2\pi}{N}\right\}^{D}$ using $\mathcal{O}$ $(1/\varepsilon)$ queries to $\widehat{U}_{V^{(0)}\dots V^{(D)}}$ and $\widehat{U}^{*}_{V^{(0)}\dots V^{(D)}}$ via amplitude estimation, or leverage a sampling method that estimates the function for all $\vec{\omega}\in\left\{\frac{0\cdot 2\pi}{N},\dots\dots,\frac{(N-1)\cdot 2\pi}{N}\right\}^{D}$ simultaneously using $\mathcal{O}$ $(1/\varepsilon^4)$ queries. The latter is achieved by modeling each frequency $\vec{\omega}$ as a Bernoulli variable with probability of success given by $\tilde{R}_{V^{(0)}\dots V^{(D)}}(\vec{\omega})$. Then, each sampled $\vec{\omega}$ not only counts as a success for its own Bernoulli variable but also as a failure for all other frequencies.

$\widehat{U}_{V^{(0)}\dots V^{(D)}}$ and $\widehat{U}^{*}_{V^{(0)}\dots V^{(D)}}$ can be written as

$$\widehat{U}_{V^{(0)}\dots V^{(D)}} = \left[\bigotimes_{j=1}^{D}\mathrm{QFT}^{\dagger}\otimes\widehat{U}^{\dagger}_{\lambda_{n_0}}\right]\left[\sum_{t_1,\cdots t_D}\bigotimes_{j=1}^{D}|t_j\rangle\langle t_j|\otimes\right.$$

$$\left.\widehat{C}_{V^{(0)}\dots V^{(D)}}(t_1,\dots,t_D)\right]\left[\bigotimes_{j=1}^{D}\widehat{U}_{\mathcal{L}_{\eta}}\otimes\widehat{U}_{\lambda_{n_0}}\right], \quad (10)$$

$$\widehat{U}^{*}_{V^{(0)}\dots V^{(D)}} = \left[\bigotimes_{j=1}^{D}\mathrm{QFT}\otimes\widehat{U}^{\dagger}_{\lambda_{n_0}}\right]\left[\sum_{t_1,\cdots t_D}\bigotimes_{j=1}^{D}|t_j\rangle\langle t_j|\otimes\right.$$

$$\left.\widehat{C}_{V^{(0)}\dots V^{(D)}}(t_1,\dots,t_D)^{\dagger}\right]\left[\bigotimes_{j=1}^{D}\widehat{U}_{\mathcal{L}^{*}_{\eta}}\otimes\widehat{U}_{\lambda_{n_0}}\right]. \quad (11)$$

Notice $\widehat{U}^{*}_{V^{(0)}\dots V^{(D)}}\neq\widehat{U}^{\dagger}_{V^{(0)}\dots V^{(D)}}$ . Here we have used the unitary $\widehat{U}_{\lambda_n}$ to denote a circuit which acts on the system register as $\widehat{U}_{\lambda_n}|0\rangle = |\lambda_n\rangle$. This unitary can be accessible.

Response Theory

The objective of response theory can be to compute how a quantum system described by $\hat{H}=\Sigma_j\lambda_j|\lambda_j\rangle\langle\lambda_j|$ changes due to outside influence, or more formally the change in an observable under one or more applications of a perturbation $\hat{V}$. For the discussion below, we work with a scaled Hamiltonian such that $\|\hat{H}\|\leq\pi$. We consider the system to start at $t=-\infty$ in an equilibrium state $\hat{\rho}_0=\Sigma_n\rho_n|\lambda_n\rangle\langle\lambda_n|$ so $[\hat{H},\hat{\rho}_0]=0$. Examples of such a state would be the ground state, an excited state, or a thermal state. Given an envelope function $f$, the expectation value of an observable $\hat{A}$ after time-evolution by the perturbed Hamiltonian $\widehat{\mathcal{H}}(t)\equiv\hat{H}+f(t)\hat{V}$ for time $t$ can be written as a series

$$\langle\hat{A}\rangle_t = \Sigma_{D=0}^{\infty}\langle\hat{A}^{(D)}\rangle_t, \quad (12)$$

where the zeroth-order contribution simply corresponds to the expectation value of $\hat{A}$ at $t=0$

$$\langle \hat{A}^{(0)} \rangle_t = \mathrm{Tr}\{e^{i\hat{H}t}\hat{A}e^{-i\hat{H}t}\hat{\rho}_0\} = \mathrm{Tr}\{\hat{A}\hat{\rho}_0\}, \qquad (13)$$

and the first-order correction is written as

$$\langle \hat{A}^{(1)} \rangle_t = i \int_0^\infty dt_1 f(t - t_1) \mathrm{Tr}\{[\hat{A}_I(t_1), \hat{V}]\hat{\rho}_0\}. \quad (14)$$

This can correspond to a convolution between the envelope function $f$ and the linear response

$$\chi_{AV}^{(1)}(t) \equiv \theta(t)\mathrm{Tr}\{[\hat{A}_I(t), \hat{V}]\hat{\rho}_0\}, (15)$$

where $\theta_{(t)}$ is the Heaviside step function. More generally the $D^{\text{th}}$-order correction to the expectation value can be written as

$$\langle \hat{A}^{(D)} \rangle_t = i^D \int_{-\infty}^\infty dt_1 \int_{-\infty}^\infty dt_2 \ldots \int_{-\infty}^\infty dt_D \, \chi_{AV}^{(D)}(t_D, \ldots, t_1) \prod_{j=1}^D f\left(t - \sum_{k=0}^{j-1} t_{D-k}\right), (16)$$

which corresponds to a total of D convolutions. Accordingly, the time-dependent nonlinear response can be

$$\chi_{AV}^{(D)}(t_1, \ldots, t_D) \equiv$$

$$\left(\prod_{j=1}^D \theta(t_j)\right) \mathrm{Tr}\left\{\left[\ldots\left[\left[\hat{A}_I\left(\sum_{i=1}^D t_i\right), \hat{V}_I\left(\sum_{i=1}^{D-1} t_i\right)\right], \hat{V}_I\left(\sum_{i=1}^{D-2} t_i\right)\right], \ldots, \hat{V}_I(0)\right], \hat{\rho}_0\right\}. \qquad (17)$$

The trace over the nested commutators will give a sum of correlation functions for different permutations of $\hat{A}_I$ and $\hat{V}_I$'s with their associated times. The associated multidimensional Fourier conjugate then becomes

$$\chi_{AV}^{(D)}(\omega_1, \omega_1 + \omega_2, \ldots, \omega_1 + \ldots + \omega_D) \equiv$$

$$\int_{-\infty}^\infty dt_1 e^{-i\omega_1 t_1} \int_{-\infty}^\infty dt_2 e^{-i\omega_2 t_2} \ldots \int_{-\infty}^\infty dt_D e^{-i\omega_D t_D} \chi_{AV}^{(D)}(t_1, \ldots, t_D) \qquad (18)$$

$$\equiv \sum_{\alpha=1}^{2^D} R_{AV}^{(D,\alpha)}(\vec{\omega}), \qquad (19)$$

where each of the $\alpha = 1, \ldots, 2^D$ contributions coming from the D commutators can be associated to a different path in Liouville space, which yields a $R_{AV}^{(D,\alpha)}(\vec{\omega})$ path response. Through the use of the convolution theorem, the change in expectation value can then be calculated as

$$\langle \hat{A}^{(D)} \rangle_t = \left(\frac{i}{2\pi}\right)^D \int_{-\infty}^\infty d\omega_1 \int_{-\infty}^\infty d\omega_2 \ldots \int_{-\infty}^\infty d\omega_D \chi_{AV}^{(D)}(\omega_1 + \ldots \omega_D, \ldots, \omega_1 +$$

$$\omega_2, \omega_1) \prod_{j=1}^D F(\omega_j) e^{it\omega_j}, \qquad (20)$$

where we have defined the Fourier transform of the envelope function $F(\omega) = \mathcal{F}_{t\to\omega}[f(t)]$. For simplicity we focus on the path corresponding to the first term where all commutators were taken with the positive sign. All other paths will have a completely analogous treatment, while having a permutation of the $\hat{A}_I$ and $\hat{V}_I$ operators. The path response function then becomes

$$R_{AV}^{(D,1)}(\vec{\omega}) =$$

$$\int_{-\infty}^{\infty} dt_1 \int_{-\infty}^{\infty} dt_2 . \int_{-\infty}^{\infty} dt_D e^{-i\vec{\omega}\cdot\vec{t}} \theta(t_1)\dots\theta(t_D)\mathrm{Tr}\{e^{i\hat{H}(t_1+\dots+t_D)}\hat{A}e^{-i\hat{H}t_D}\hat{V}e^{-i\hat{H}t_{D-1}}\dots\hat{V}e^{-i\hat{H}t_1}\hat{V}\hat{\rho}_0\}$$

$$= \sum_{n_0,n_1,\dots,n_D} \rho_{n_0} A_{n_0 n_1} V_{n_1 n_2}\dots V_{n_{D-1} n_D} V_{n_D n_0} \Theta(\omega_1 - \Delta_{10})\Theta(\omega_2 - \Delta_{20})\dots\Theta(\omega_D -$$

$$\Delta_{D0}). \qquad (21)$$

Here we have defined the Fourier transform of the Heaviside function $\Theta(\omega) = \mathcal{F}_{t\to\omega} [\theta(t)]$. Special care needs to be taken when considering this Fourier transform since it can need analytical continuation to be evaluated. This Heaviside function enforces causality and is related to the Kramers-Kronig relations.

In physical systems, dissipative mechanisms often lead to a spectral broadening. A large class of dissipative effects can be added to the above formalism by making the modification $e^{\pm i\hat{H}t} \to e^{\pm i\hat{H}t}e^{\hat{\Gamma}(t)}$ where $[\hat{H}, \hat{\Gamma}(t)] = 0$. This enforces a dissipation rate $\gamma_n(t)$ at time t for each eigenstate $|\lambda_n\rangle$. In the case of a scalar uniform broadening, we have $\hat{\Gamma}(t) = \gamma(t)$, which corresponds to having the same rate for all states. Within our framework this corresponds to setting the lineshape $\mathcal{L}(\omega) = \mathcal{F}_{t\to\omega} (\theta(t) \exp(-\gamma(t)))$, which is implemented by preparing the appropriate superposition in the time registers. In practice, commonly used broadenings include Lorentzian, Gaussian, and Voigt functions. Connecting this to the path response we get

$$R_{AV}^{(D,\alpha)}(\vec{\omega}) = \left(\prod_{i=1}^{D} \mathcal{L}(\omega_i)\right) *^D C^{(\alpha)}(\vec{\omega}). (22)$$

$C^{(\alpha)}(\vec{\omega})$ is the associated correlation function for the path $\alpha$. We find $C^{(\alpha)}(\vec{\omega})$ by writing the associated expectation value, e.g., for $D = 3$:

$$C^{(\alpha)}(\vec{t}) = \mathrm{Tr}\{\hat{V}_I(0)\hat{V}_I(t_1)\hat{A}_I(t_1 + t_2 + t_3)\hat{V}_I(t_1 + t_2)\hat{\rho}_0\}, \qquad (23)$$

after which we expand the time evolutions and cancel trivial terms

$$C^{(\alpha)}(\vec{t}) = \mathrm{Tr}\{\hat{V}e^{i\hat{H}t_1}\hat{V}e^{-i\hat{H}t_1}e^{i\hat{H}(t_1+t_2+t_3)}\hat{A}e^{-i\hat{H}(t_1+t_2+t_3)}e^{i\hat{H}(t_1+t_2)}\hat{V}e^{-i\hat{H}(t_1+t_2)}\hat{\rho}_0\}(24)$$

$$= \mathrm{Tr}\{\hat{V}e^{i\hat{H}t_1}\hat{V}e^{i\hat{H}(t_2+t_3)}\hat{A}e^{-i\hat{H}t_3}\hat{V}e^{-i\hat{H}(t_1+t_2)}\hat{\rho}_0\}. \qquad (25)$$

Thus, using the circuits and workflows mentioned above, with the corresponding permutation, we have established a way to calculate the contribution from any given path to the response of a system.

Finally, note that while the algorithm described above assumes the input is a pure eigenstate $|\lambda_{n_0}\rangle$, the algorithm can be applied to an equilibrium mixed state $\hat{\rho}_0$ via either a Stinespring dilation or by sampling the preparation unitary $\hat{U}_{\lambda_{n_0}}$ for each run with probability $Tr\{\langle\lambda_{n_0}|\hat{\rho}_0|\lambda_{n_0}\rangle\}$.

Applications

A few applications of the response framework are now provided as examples, starting with absorption/emission spectroscopy under the dipole approximation. The absorption/emission spectrum of a system can be written as the frequency-domain correlation function of the dipole operator with itself, often referred to as the auto-correlation. That is $\hat{A} = \hat{V} = \hat{\mu}$ for $\hat{\mu}$ the transition dipole operator

$$\chi_{\mu\mu}^{(1)}(\omega) = \sum_{n,m} \rho_n \mu_{nm}\mu_{mn} \, \mathcal{L}(\omega - \Delta_{mn}). \qquad (26)$$

For simplicity, we assume a real dipole moment. Our framework can also be utilized for nonlinear spectroscopic techniques such as Raman spectroscopy. As a particular example we now showcase a resonant Raman process, for which only a single path in Liouville space has a significant contribution. Considering an incoming/scattered photon with frequency $\omega_I/\omega_S$, the resonant Raman cross section can be expressed through the Kramers-Heisenberg formula:

$$\frac{d^2\sigma(\omega_I,\omega_S)}{d\omega_I d\Omega} \propto \frac{\omega_S}{\omega_I} \chi_{\mu\mu}^{(3)}(\omega_I, \omega_S - \omega_I, \omega_I) \quad (27)$$

$$\chi_{\mu\mu}^{(3)}(\omega_I, \omega_S - \omega_I, \omega_I) = \sum_{n_0,n_1,n_2,n_3} \mu_{n_0 n_1}\mu_{n_1 n_2}\mu_{n_2 n_3}\mu_{n_3 n_0} \mathcal{L}_{\eta_{int}}(\omega_I -$$

$$\Delta_{10})\mathcal{L}_{\eta_{int}}^*(\omega_I - \Delta_{30})\mathcal{L}_{\eta_f}(\omega_I - \omega_S - \Delta_{20}). \qquad (28)$$

Note how different broadenings can appear given the energy-dependent dissipation $\hat{\Gamma}(t)$. The resonant nature of this process makes intermediate states be localized in energies, meaning the dissipation at each different stage can be approximated by an associated constant rate, resulting in the broadenings $\eta_{int}$ and $\eta_f$.

Time-Domain Implementation

An example of the time-domain implementation will now be presented. This approach can be more hardware-efficient in some embodiments. Here, the Fourier transform associated with time integration is performed using a classical computer. Our starting point is Eq. (22), which indicates all path responses can be written as a $D$-dimensional convolution of a correlation function with $D$ lineshapes. For simplicity we assume all lineshapes to be equal, being understood that the reasoning can be extended to non-equal lineshapes. The frequency-dependent correlation function $C^{(\alpha)}(\vec{\omega})$ will be 0 whenever some $|\omega_j| > \pi$. We can thus consider all associated frequencies to go from $\omega_j \in [-\pi, \pi)$ as opposed to $(-\infty, \infty)$. We now make a key assumption of a localized lineshape, which can be translated as $\mathcal{L}(\omega) \approx 0 \; \forall |\omega| > \pi$. This allows us to approximate the lineshape by a periodic function in the interval $[-\pi, \pi)$. $\mathcal{L}(\omega)$ can then be expressed as a Fourier series instead of a Fourier integral:

$$\mathcal{L}(\omega) \approx \sum_{k=-\infty}^{\infty} L_k e^{ik\omega}. \qquad (29)$$

Here, $L_k = \theta(k)e^{-\gamma(k)}$. This approximation becomes increasingly better the more localized the lineshape is inside the $[-\pi, \pi)$ interval, becoming exact if $\mathcal{L}(\omega) = 0 \; \forall |\omega| > \pi$.

Through these considerations, both the correlation function and the lineshapes become periodic functions over each frequency $\omega_j \in [-\pi, \pi)$. Using the convolution theorem for Fourier series, we can write

$$R_{AV}^{(D,\alpha)}(\vec{\omega}) \approx \sum_{k_1=-\infty}^{\infty} \cdots \sum_{k_D=-\infty}^{\infty} \left(\prod_{j=1}^{D} L_{k_j}\right) c^{(\alpha)}(\vec{k}) e^{-i\vec{k}\cdot\vec{\omega}} \qquad (30)$$

Here, we have defined the Fourier series for the correlation function as the Fourier conjugate of $C^{(\alpha)}(\vec{\omega})$ with the periodicity condition:

$$c^{(\alpha)}(\vec{k}) = \frac{1}{(2\pi)^D} \int_{-\pi}^{\pi} d\omega_1 \cdots \int_{-\pi}^{\pi} d\omega_D C^{(\alpha)}(\vec{\omega}) e^{-i\vec{\omega}\cdot\vec{k}}. \qquad (31)$$

This is a time-dependent correlation function, which we here denote with a lowercase here to avoid confusion with its frequency-dependent Fourier conjugate $C^{(\alpha)}(\vec{\omega})$. Note that explicitly expressing the scaling of $\hat{H}$ by $\tau$ amounts to considering $\vec{k} \to \tau\vec{k}$. We now show how to calculate the response in Eq. (30). A key element is to approximate $R_{AV}^{(D,\alpha)}(\vec{\omega})$ by approximating its Fourier series coefficients. We start by defining a distribution over $\vec{k}$ associated with the lineshapes as

$$P_{\vec{k}} P_{\text{tot}} \equiv \prod_{j=1}^{D} L_{k_j} \approx \prod_{j=1}^{D} \theta(\tau k_j) e^{-\gamma(\tau k_j)}, \qquad (32)$$

with $P_{\text{tot}}$ a normalization constant such that $\Sigma_{\vec{k}} P_{\vec{k}} = 1$. We can then write the path response as

$$R_{AV}^{(D,\alpha)}(\vec{\omega}) \approx P_{\text{tot}} \sum_{\vec{k}} P_{\vec{k}} c^{(\alpha)}(\tau \vec{k}) e^{-i\vec{k}\cdot\vec{\omega}}. \qquad (33)$$

The idea of the Monte Carlo based approach is to construct a series over $M$ samples $(\vec{k}^{(1)}, \vec{k}^{(2)},...,\vec{k}^{(M)})$ taken from $P_{\vec{k}}$. By considering an associated set of random variables $\{x^{(\alpha)}(\vec{k}^{(m)})\}$ with mean $\mathbb{E}[x^{(\alpha)}(\vec{k})] = c^{(\alpha)}(\tau \vec{k})$, we can construct an approximation of the response as

$$\tilde{R}_M^{(\alpha)}(\vec{\omega}) = \frac{P_{tot}}{M} \sum_{m=1}^{M} x^{(\alpha)}(\vec{k}^{(m)}) e^{-i\vec{k}^{(m)}\cdot\vec{\omega}}. \qquad (34)$$

It now becomes clear how by sampling $\vec{k}^{(m)}$ for $m = 1,...,M$ and having a circuit with mean $c^{(\alpha)}(\tau \vec{k})$ for a given $\vec{k}$ we can recover the response function. Note that path response functions always come in pairs with an interference that removes the real (imaginary) component for $D$ being even (odd). Thus, out of the possible $2^D$ different paths, the information of interest lies in the real (imaginary) component of $2^{D-1}$ paths. This can be directly accessed through a Hadamard test. Defining $\mathbf{J}[\cdot] \equiv \mathbf{Re}[\cdot]/\mathbf{Im}[\cdot]$ for $D$ even/odd, we recover the sum of two interfering path responses, up to a factor of $i$, as

$$\tilde{R}_M^{(\alpha)}(\vec{\omega}) + \tilde{R}_M^{(\bar{\alpha})}(\vec{\omega}) = \frac{P_{\text{tot}}}{M} \sum_{m=1}^{M} \mathbf{J}[x^{(\alpha)}(\vec{k}^{(m)})] e^{-i\vec{k}^{(m)}\cdot\vec{\omega}}, \qquad (35)$$

**where** $\bar{\alpha}$ represents the conjugated path which interferes with path $\alpha$. Thus, by sampling a $\vec{k}$ from the distribution and then obtaining the associated $\mathbf{J}[x^{(\alpha)}(\vec{k})]$ from running a Hadamard test for the associated correlation function, we can recover the path response function. This is shown in Fig. 9.

Note that all considerations with respect to the possible mixed nature of the initial state $\hat{\rho}_0$ are the same as for the frequency domain, which was discussed in the previous section.

This approach allows us to recover the target path response for a given target accuracy $\varepsilon$ by running the Hadamard circuit in Fig. 9 a total number of $M \sim \mathcal{O}\left(\frac{1}{(\epsilon\tau^{-1})^2} \frac{1}{(\eta\tau)^{2D}}\right)$ times. Noting that in average each of these circuits will require to apply $\mathcal{O}\left(\frac{D}{\eta\tau}\right)$ time evolutions by $e^{i\hat{H}\tau}$, the total number of calls to this time evolution oracle will scale as

$$\mathcal{O}\left(\frac{D}{\epsilon^2 \eta^{2D+1} \tau^{2D-1}}\right). \qquad (36)$$

The framework can be used for calculating response properties on a quantum computer. The $D^{\text{th}}$ order response function can contain all the information about how the expectation value of some observable $\hat{A}$ changes with respect to $D$ interactions with some perturbation $\hat{V}$. There is a total of $2^D$ possible paths in Liouville space that contribute to the response function. Each one of these can be linked to a different correlation function, consisting of a permutation of: $D$ applications of $\hat{V}$, one application of $\hat{A}$, and $D + 1$ time evolutions. The framework allows for a direct sampling of the frequency-dependent contribution to the response function to a given path. By using amplitude amplification techniques, we can also target specific frequencies for a reduced overall complexity. Note that it is often the case that we know *a priori* which paths will have a significant contribution, as is the case in e.g., resonant Raman processes. In such cases simulation of a reduced number of paths will be enough to recover the target response; otherwise, simulations may be run over all paths and combined.

The framework can be said to naturally incorporate lineshape effects into our obtained quantities, without the need of any post processing. These appear as a result of the interaction of the system with a dissipative environment, and its inclusion can have dramatic effects in the final shape of the response function. In addition, response functions also include a contribution that is linked to causality effects. We have shown how this contribution can either be implicitly included in the lineshapes, or it can also be explicitly added to "non-causal lineshapes" after the calculation has been done. We note that more complicated dissipative environments can also be included in the framework by replacing unitary Hamiltonian evolutions with their non-unitary Liouvillian counterpart. It is expected that the framework can be adapted to work with the qubitized walk operator as opposed to time evolution operator.

Finally, we also presented an implementation which may be more hardware-friendly, where the Fourier integral can be done on classical hardware instead of on the quantum computer. This may avoid the need to have a large number of qubits encoding the time/frequency domain, along with the associated multiplexed application of time evolution operators.

The circuits can directly produce distributions of interest as a result of measurement. It will be noted that the unitary $\hat{U}_{V(0)...V(D)}$ from Eq. (10) can be used perform the squared amplitude routine, whereas the LCU unitaries in Eq. (9), with $U + U^*$ (real part) and $U - U^*$ (imaginary part) can be used to implement the complex amplitude routine.

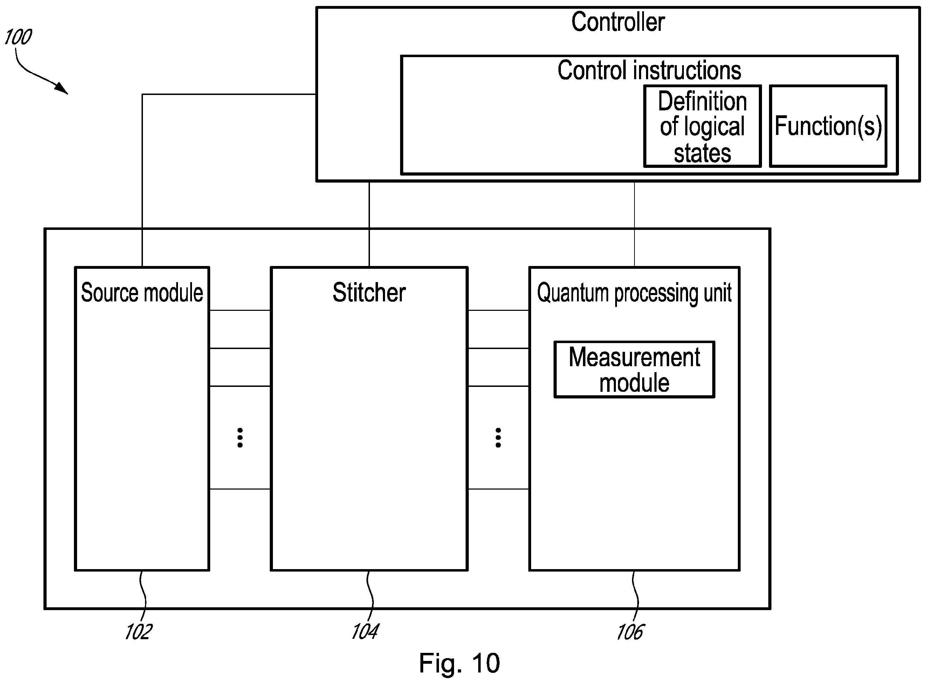

Fig. 10 illustrates a simplified system-level block diagram of another example of a quantum computer 100. The components of the quantum computer 100, described in more detail below, can be configured to one or more of: create, generate, shape, measure, decode, and error-correct a selected entangled cluster state that serves as a resource for measurement-based fault-tolerant quantum computation. For example, the quantum computer 100 may be a measurement-based quantum computer in the Raussendorf-Harrington-Goyal (RHG) model using continuous-variable (CV) qubits. Although an example is described below in the context of a measurement-based quantum computing model based on a photonic platform, it is understood that embodiments of the methods described herein are also applicable to other quantum platforms, including superconducting qubits, trapped ion qubits, and any other quantum platforms, and may be of use in circuit-based quantum computing models and even potentially in adiabatic quantum computing models.

Returning to the example presented in Fig. 10, in some embodiments, the quantum computer 100 includes a source module 102, a stitcher 104, and a quantum processing unit (QPU) 106. Each of the source module 102, the stitcher 104, and the QPU 106 represents logical functionality that can be implemented exclusively via hardware, exclusively via software, or via a combination of hardware and software. The functional delineation between the separate elements within the quantum computer 100 may only be a conceptual representation of the overall operation of the quantum computer 100.

The source module 102 is configured to generate a plurality of input quantum states. In the case of photonic quantum platforms, the source module 102 may include a plurality of Gaussian Boson Sampling (GBS) sources each configured to generate a continuous-variable (CV) state of light, such as Gottesman-Kitaev-Preskill (GKP) state. Data is mapped onto the generated CV states.

In some embodiments, the source module 102 may include a local pulse train generator. The local pulse train generator is configured to generate a train of local optical pulses that are also referred to as a local oscillator (LO) signal that is operably coupled to elements of quantum computer 100, such as QPU 106, and particularly to the optical detectors (e.g., homodyne detectors) used for projective measurements and for measurement-based quantum computation.

A steady supply of CV states that include both encoded bosonic qubits and squeezed vacuum states may be generated by the source module 102 and sent to the stitcher 104 via a network of optical connections. In some embodiments, the source module 102, the stitcher 104, and the QPU 106 are implemented on photonic integrated circuits (PICs), and the optical network may be implemented using optical fibers compatible with existing optical technologies, which may have a lower level of propagation loss compared to on-chip waveguides. In some embodiments, the source module 102 generates the desired CV states by performing Pauli measurements on intermediary CV states within the source module 102. In the case of photonic quantum computing architectures, the Pauli measurements may be performed by way of homodyne detection.

The states generated by the source module 102 are provided to the stitcher 104, which is configured to stitch the input states into a lattice structure in accordance with a specific encoding scheme. In some embodiments, the stitcher 104 can interfere these states, such as through a network of static 50:50 beamsplitters with phase delays or reconfigurable beamsplitters into what is referred to as a higher dimensional multimode entangled state, referred to hereinbelow as a cluster state for short, before sending/routing the multimode entangled state to the QPU 106 to be processed. As used herein, "stitching" refers to the creation/imposition of entanglement between the different modes at different lattice sites. In some embodiments, during operation of the quantum computer 100, non-deterministically generated encoded qubits and non-Gaussian states of light can be stitched into a random but known subset of the sites (by virtue of them being generated at a random subset of locations, and not being generated at other locations), while the remaining sites are populated with deterministically generated Gaussian states, such as squeezed vacuum states for example. An indication of whether or not a location is within the subset of the sites is provided.

Measurements can be performed on the higher dimensional multimode entangled state by a measurement module 108 of the QPU 106 to provide electric field quadrature information (e.g., the position or amplitude quadrature referred to herein as the "$q$ quadrature" and the momentum or phase quadrature referred to herein as the "$p$ quadrature"). The measurements are performed by one or more optical detectors of the measurement module 108. In some embodiments, the optical detectors are homodyne detectors which can be used to perform measurements on each macronode of the multimode state to reduce each macronode into a single node with multiple edges. The measurement outcomes can be used by the quantum computing system to perform error correction and can also be utilized by the system to perform measurement-based quantum computation (MBQC). The optical detectors, (e.g., homodyne detectors) may be configured to perform quadrature measurements by interfering the optical modes of an input entangled resource state and the train of local optical pulses on a beamsplitter and detecting the optical power difference of the two beam splitter outputs as an indication of the modal property(ies) of the quantum state of the given optical pulse. The measurement outcomes collected on the multimode entangled states (i.e., at the physical hardware layer) can be processed together to implement one or more aspects of an error correction code. The measurement results can be processed by the QPU 106, which may be configured to take, as inputs, the measurement outcomes that have been realized to perform the logical operations.

The control of the at least one of and typically each one of the source module 102, stitcher 104, and quantum processing unit 106 cannot be performed manually and is performed via hardware and software elements which will be referred to herein as a controller. The controller can be a classical computer, i.e., a computer based on bits rather than qubits for computation, including at least one processor wherein control instructions are stored in computer-readable memory and are accessible to the at least one processor. The control instructions can include a plurality of functions, such as a source module control function, a stitcher module control function, and a quantum processing unit control function, each of which can include a plurality of sub-processes. The control instructions typically include a definition of logical states which are mapped to the specific hardware elements of the given embodiment.

It will be understood that the expression "classical computer", "Turing machine", or simply "computer" for short, as used herein, is not to be interpreted in a limiting manner. It is rather used in a broad sense to generally refer to the combination of some form of one or more processing units and some form of memory system accessible by the processing unit(s). The memory system can be of the non-transitory type. The use of the expression "computer" in its singular form as used herein includes within its scope the combination of two or more computers working collaboratively to perform a given function. Moreover, the expression "computer" as used herein includes within its scope the use of partial capabilities of a given processing unit. Example computers include supercomputers, desktops, laptops, smartphones, smart watches, less elaborated controller devices, etc.

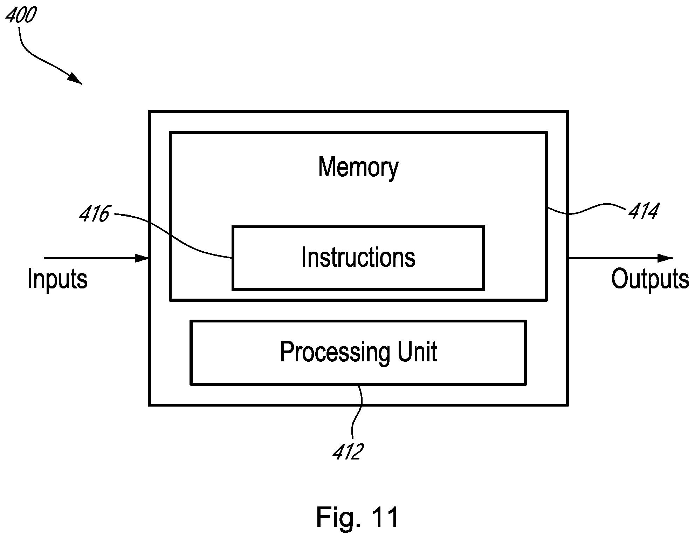

An example computer 400 is presented in Fig. 11. In this example, the computer 400 includes a processing unit 412 and a memory system 414 storing instructions 416.

A processing unit 412 can be embodied in the form of a general-purpose microprocessor or microcontroller, a digital signal processing (DSP) processor, an integrated circuit, a field programmable gate array (FPGA), a reconfigurable processor, or a programmable read-only memory (PROM), to name a few examples.

The memory system 414 can include a suitable combination of any suitable type of computer-readable memory located either internally or externally, and accessible by the processor in a wired or wireless manner, either directly or over a network such as the Internet. A computer-readable memory can be embodied in the form of random-access memory (RAM), read-only memory (ROM), compact disc read-only memory (CDROM), electro-optical memory, magneto-optical memory, erasable programmable read-only memory (EPROM), electrically erasable programmable read-only memory (EEPROM), or ferroelectric RAM (FRAM), to name a few examples.

A computer 400 can have one or more input/output (I/O) interfaces to allow communication with a human user and/or with another computer via an associated input, output, or input/output device such as a keyboard, a mouse, a touchscreen, an antenna, a port, etc. Each I/O interface can enable the computer to communicate and/or exchange data with other components, to access and connect to network resources, to serve applications, and/or to perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, Bluetooth, WiMAX), SS7 signaling network, fixed line, local area network, or wide area network, to name a few examples.

It will be understood that a computer can perform functions or processes via hardware or a combination of both hardware and software. For example, hardware can include logic gates included as part of a silicon chip of a processor. Software (e.g., an application or process) can be in the form of data such as computer-readable instructions stored in a non-transitory computer-readable memory accessible by one or more processing units. With respect to a computer or a processing unit, the expression "configured to" relates to the presence of hardware or a combination of hardware and software which is operable to perform the associated functions. Different elements of a computer, such as processor and/or memory, can be local, in part remote, or in whole remote and/or distributed and/or virtual.

The methods and systems performed by the classical computer in the context of the present disclosure may be implemented in a high-level procedural or object-oriented programming or scripting language, or a combination thereof, to communicate with or assist in the operation of a computer system, for example the controller. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically, the functionality of the program modules may be combined or distributed as desired in various embodiments. The technical solution of embodiments may be in the form of a software product. The software product may be stored in a non-volatile or non-transitory storage medium, which can be a compact disk read-only memory (CDROM), a USB flash disk, or a removable hard disk. The software product includes a number of instructions that enable a computer device (personal computer, server, or network device) to execute the methods provided by the embodiments.

The embodiments described herein are implemented by physical computer hardware. The embodiments described herein provide useful physical machines and particularly configured computer hardware arrangements. The embodiments described herein are directed to electronic and optical machines and methods implemented by electronic and optical machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

As can be understood, the examples described above and illustrated are intended to be exemplary only. The scope is indicated by the appended claims.

**Claims**

1.   A method of measuring a response function of a quantum system using a quantum computer, the method comprising:

   performing a plurality of iterations for each one of one or more paths along which the quantum system may evolve from an initial state to a final state due to one or more actions of an effect, each iteration including:

      preparing the initial state of the quantum system in a system register of the quantum computer, including applying a preparation circuit;
      encoding possible values of one or more time delays as initial superpositions in corresponding ones of one or more auxiliary registers of the quantum computer;
      applying a sequence of operators interspersed with time evolutions in a permutation specific to the corresponding path, wherein the operators are one or more operators corresponding to the one or more actions of the effect and an operator corresponding to the action of an observable of the quantum system, the operators are applied by block encoding, the time evolutions each correspond to one or more of the time delays, and the application of each time evolution is multiplexed on all of the one or more auxiliary registers associated to the corresponding one or more time delays;
      applying a Hermitian conjugate of the preparation circuit to the system register;
      measuring the system register;
      applying a Fourier transform to the one or more auxiliary registers; and
      measuring the one or more auxiliary registers; and

   building one or more histograms based on the measurements acquired from each one of the plurality of iterations, and obtaining the response function from the one or more histograms.

2.   The method of claim 1 wherein the plurality of iterations of the method are repeated for more than one path contributing to the response function, wherein, in the different repetitions, the permutation is different.

3. The method of claim 1 or 2 wherein each iteration further includes determining whether the measurement of the system register corresponds to the initial state, wherein said building the histogram includes integrating the measurement of the one or more auxiliary registers to the histogram contingent upon said measurement of the system register corresponding to the initial state.

4. The method of any one of claims 1 to 3 wherein said building the histogram includes normalizing the histogram based on the measurements acquired in each one of the iterations.

5. The method of any one of claims 1 to 4 wherein the observable corresponds to an operator $\hat{A}$, the quantum system corresponds to a Hamiltonian $\hat{H}$, there are a number $D$ of action(s) of the effect, the effect corresponds to an operator $\hat{V}$, there are up to $2^D$ paths, the paths being paths in Liouville space, said encoding includes encoding $D$ time delays $t_k$ between $D$ actions of $\hat{V}$ and one action of $\hat{A}$ in the permutation specific to the corresponding path, and the time evolutions are in the form $\exp(\pm i\hat{H}t)$.

6. The method of claim 5 wherein said measuring the one or more auxiliary registers includes acquiring a binary encoding of $D$ frequencies, and wherein said building the histogram includes building the histogram of the $D$ frequencies based on the repeated acquisitions of the binary encoding, until the histogram converges to the response function within a level of statistical representativity.

7. The method of claim 5 or 6 wherein when applying the operators and time evolutions, the different time evolutions are associated to different ones of the time delays $t_k$ and to different values of a variable $k$, and the operators are associated to said different values of the variable $k$ in accordance with the permutation, and said applying the correlation function circuit includes executing the following routine:

   i) set $k = 1$;
   ii) apply time evolution associated to a current value of $k$, controlled on all auxiliary registers which encode the corresponding time delay;
   iii) apply block encoding of one of the operators associated to the current value of $k$;
   iv) set $k = k + 1$;
   v) if $k = D + 1$, apply the time evolution associated to current value of $k$, controlled on all auxiliary registers which encode the corresponding time delay, else go to ii).

8. The method of claim 7 wherein, in different repetitions of the method corresponding to different ones of the paths, the operators are associated to different values of $k$.

9. The method of any one of claims 1 to 4 wherein the quantum system corresponds to a Hamiltonian represented in a Hilbert space, and the response function lies in a subspace of the Hilbert space, wherein said initial state of the quantum system and said operators are represented in the subspace of the Hilbert space.

10. A method of measuring a response function of a quantum system using a quantum computer, the method comprising: for each one of one or more paths along which the quantum system may evolve from an initial state to a final state due to one or more actions of an effect:

   performing a plurality of iterations, each iteration including:

   preparing the initial state of the quantum system in a system register of the quantum computer;
   sampling, using a Monte Carlo process, one or more distributions of possible values of a number of time delays, the number of time delays corresponding to a number of the one or more actions, and thereby isolating a value of each one of the time delays;
   performing a Hadamard test on the value of each one of the time delays, including:

   applying a first Hadamard gate to an ancilla qubit, thereby preparing the ancilla qubit into a superposition;
   applying a sequence of operators interspersed with time evolutions in a permutation specific to the corresponding path, wherein the operators are one or more operators corresponding to the one or more actions of the effect and an operator corresponding to the action of an observable of the quantum system, the operators are applied by block encoding, the time evolutions each correspond to one or more of the one or more time delays, and the application of each time evolution is controlled on the ancilla register;
   if a number of the one or more actions of the effect is odd, applying a Hermitian conjugate of a phase gate on the ancilla qubit;

applying a second Hadamard gate on the ancilla qubit; and

measuring the ancilla qubit, thereby sampling a single random variable associated with the values of the delays from a function with a number of variables corresponding to the number of the one or more paths;

building a time series of the single random variables obtained from the plurality of iterations; and

performing a Fourier transform of the time series; and

obtaining the response function from a result of the Fourier transform performed for each one of the one or more paths.

11. The method of claim 10 wherein the plurality of iterations of the method are repeated for more than one path contributing to the response function, wherein, in the different repetitions, the permutation is different.

12. The method of claim 10 or 11 wherein the observable corresponds to an operator $\hat{A}$, the quantum system corresponds to a Hamiltonian $\hat{H}$, there are a number $D$ of action(s) of the effect, the effect corresponds to an operator $\hat{V}$, there are up to $2^D$ paths, the paths being paths in Liouville space, and the time evolutions are in the form $\exp(\pm i\hat{H}t)$.

13. The method of claim 12 wherein when applying the operators and time evolutions, the different time evolutions are associated to different ones of the time delays $t_k$ and to different values of a variable $k$, and the operators are associated to said different values of the variable $k$ in accordance with the permutation, and said applying the correlation function circuit includes executing the following routine:

i) set $k = 1$;

ii) apply time evolution associated to a current value of $k$;

iii) apply block encoding of one of the operators associated to the current value of $k$;

iv) set $k = k + 1$;

v) if $k = D + 1$, apply the time evolution associated to current value of $k$, else go to ii).

14. The method of claim 13 wherein, in different repetitions of the method corresponding to different ones of the paths, the operators are associated to different values of $k$.

15. The method of claim 10 or 11 wherein the quantum system corresponds to a Hamiltonian represented in a Hilbert space, and the response function lies in a subspace of the Hilbert space, wherein said initial state of the quantum system and said operators are represented in the subspace of the Hilbert space.

Fig. 1

Initialization → Quantum correlation function → Collect statistics → Post processing

Fig. 2

Fig. 3

Initial state computation → Determine subroutine

If squared amplitude → Squared amplitude routine

If complex amplitude → Complex amplitude routine

Correlation function circuit implementation

→ Initial state uncomputation

Fig. 4A

$|\bar{0}\rangle_{QPE}$

$|\bar{0}\rangle_{S}$

$|\bar{0}\rangle_{BE}$

$U_{v(0)\cdots v(D)}^{(\alpha)}$

Fig. 4B

$|\bar{0}\rangle_{QPE}$

$|\bar{0}\rangle_{S}$

$|\bar{0}\rangle_{BE}$

$\bigotimes_{j=1}^{D} U_{L\eta}$

$f\,or(\vec{\tau})$

$QFT^{\dagger}$

$U_{\lambda n0}$

$C_{AV}^{(\alpha)}(\vec{\tau})$

$U_{\lambda n0}^{\dagger}$

Fig. 4C

$|0\rangle$

$|\bar{0}\rangle_{QPE}$

$|\bar{0}\rangle_{S}$

$|\bar{0}\rangle_{BE}$

$H$

$U_{v(0)\cdots v(D)}^{(\alpha)}$

$U_{v(0)\cdots v(D)}^{(\alpha)}$

$H$

$$\left|R_{AV}^{(D,\alpha)}(\omega)\right|^2$$

Function implementary correlation function

Particular $\omega$ can be estimated with amplitude estimation

Fig. 5

Fig. 6

EP 4 647 974 A1

EP 4 647 974 A1

$$\hat{U}_{V(0)\cdots V(D)} :=$$

Fig. 7

Fig. 8

$$C_{ABC}(t_1, t_2)$$

$|t_2\rangle$
$|t_1\rangle$
$|\lambda_{n0}\rangle$

Fig. 9

$$p(0) - p(1) = \mathrm{E}\left[ \mathrm{J}\left[ \mathrm{x}^{(\alpha)}(\vec{k}) \right] \right]$$

Fig. 10

400

414

Memory

Instructions

416

Inputs

Processing Unit

412

Outputs

Fig. 11

Europäisches Patentamt
European Patent Office
Office européen des brevets

# EUROPEAN SEARCH REPORT

**Application Number**

EP 25 17 4530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TYLER KHARAZI ET AL: "An efficient quantum algorithm for generation of ab initio n-th order susceptibilities for non-linear spectroscpies", ARXIV.ORG, CORNELL UNIVERSITY LIBRARY, 201 OLIN LIBRARY CORNELL UNIVERSITY ITHACA, NY 14853, 1 April 2024 (2024-04-01), XP091716699, * the whole document * | 1-15 | INV. G06N10/20 G06N10/60 ADD. G06N10/40 G06N7/01 |
| A | REI SAKUMA ET AL: "Entanglement-assisted phase estimation algorithm for calculating dynamical response functions", ARXIV.ORG, CORNELL UNIVERSITY LIBRARY, 201 OLIN LIBRARY CORNELL UNIVERSITY ITHACA, NY 14853, 30 April 2024 (2024-04-30), XP091742669, * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 23 September 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)